# EUROPEAN PATENT APPLICATION

(11) **EP 4 546 915 A1**
(43) Date of publication of application: **30.04.2025**
(21) Application number: 23842028.5
(22) Date of filing: 27.06.2023
(51) Int. Cl.: H04W 72/04

(54) **COMMUNICATION METHOD AND COMMUNICATION APPARATUS IN WIRELESS LOCAL AREA NETWORK**

(30) Priority: 22.07.2022 CN 202210870094
(71) Applicant: Huawei Technologies Co., Ltd., Shenzhen, Guangdong 518129 (CN)
(72) Inventor: YU, Jian, Shenzhen, Guangdong 518129 (CN); HU, Mengshi, Shenzhen, Guangdong 518129 (CN); GAN, Ming, Shenzhen, Guangdong 518129 (CN)
(74) Representative: Goddar, Heinz J.
(86) International application number: PCT/CN2023/102964
(87) International publication number: WO 2024/016962

(57) **Abstract**

A communication method in a wireless local area network and a communication apparatus are provided, and are applicable to a wireless local area network system supporting 802.11 series protocols such as a next-generation Wi-Fi protocol of IEEE 802.11ax like 802.11be, Wi-Fi 7, or EHT, and a next generation of 802.1 The like Wi-Fi 8. The method includes: An access point generates a trigger frame, and sends the trigger frame to a station. The trigger frame includes resource allocation information and first indication information. The first indication information indicates a first bandwidth to the station, and the resource allocation information indicates a first distributed RU that is allocated to the station and that corresponds to the first bandwidth. The first bandwidth is a bandwidth of at least one sub-channel occupied by subcarriers included in the first distributed RU. According to the method, the station may determine a distributed bandwidth range of an allocated RU, for example, in a maximum bandwidth supported by the station, or in a bandwidth outside a punctured bandwidth, to increase a transmit power of the station.

## Description

### CROSS-REFERENCE TO RELATED APPLICATIONS

This application claims priority to Chinese Patent Application No. 202210870094.2, filed with the China National Intellectual Property Administration on July 22, 2022 and entitled "COMMUNICATION METHOD IN WIRELESS LOCAL AREA NETWORK AND COMMUNICATION APPARATUS", which is incorporated herein by reference in its entirety.

### TECHNICAL FIELD

This application relates to the field of wireless fidelity technologies, and in particular, to a communication method in a wireless local area network and a communication apparatus.

### BACKGROUND

An actual transmit power of a device is limited by a maximum transmit power and maximum power spectral density supported by the device. In other words, the transmit power of the device cannot exceed the maximum power, and transmit power spectral density of the device cannot exceed the maximum power spectral density. In a low power indoor scenario in a 6 GHz frequency band, an actual transmit power, limited by maximum power spectral density, of a device is usually lower than a maximum transmit power supported by the device. As a transmit bandwidth increases, the maximum transmit power supported by the device also increases accordingly. Therefore, the transmit bandwidth of the device may be expanded, to increase the transmit power of the device. Expanding the transmit bandwidth means mapping subcarriers included in a resource unit (resource unit, RU) to a larger bandwidth.

Currently, a range of a bandwidth to which subcarriers included in one RU can be mapped is the entire bandwidth. When a part of the entire bandwidth is punctured, some subcarriers included in the RU may be mapped to the punctured bandwidth. Consequently, the RU cannot be used, and the transmit power of the device cannot be increased. In addition, when a maximum bandwidth supported by the device is limited, some subcarriers included in the RU are mapped to a bandwidth outside the bandwidth supported by the device. Consequently, the RU cannot be used, and the transmit power of the device cannot be increased.

### SUMMARY

This application provides a communication method in a wireless local area network and a communication apparatus, to increase a transmit power of a device.

According to a first aspect, an embodiment of this application provides a communication method in a wireless local area network. The method may be performed by a first communication apparatus. The first communication apparatus may be a communication device or a communication apparatus, for example, a chip system, that can support a communication device in implementing a function required by the method. For example, the first communication apparatus is a first communication device, a chip disposed in a first communication device, or another component configured to implement a function of a first communication device. The following is described by using an example in which the first communication device is an access point (access point, AP).

The method includes: The access point generates a trigger frame, and sends the trigger frame to a station. The trigger frame includes resource allocation information and first indication information, the first indication information indicates a first bandwidth to the station, and the resource allocation information indicates a first distributed RU that is allocated to the station and that corresponds to the first bandwidth. The first distributed RU includes a plurality of non-contiguous subcarriers in frequency domain. The first bandwidth is a bandwidth of at least one sub-channel occupied by the subcarriers included in the first distributed RU.

According to a second aspect, an embodiment of this application provides a communication method in a wireless local area network. The method may be performed by a second communication apparatus. The second communication apparatus may be a communication device or a communication apparatus, for example, a chip system, that can support a communication device in implementing a function required by the method. For example, the second communication apparatus is a second communication device, a chip disposed in a second communication device, or another component configured to implement a function of a second communication device. The following is described by using an example in which the second communication device is a station (station, STA).

The method includes: The station receives a trigger frame sent by an access point, and sends a TB PPDU on a first distributed RU based on triggering of the trigger frame. The trigger frame includes resource allocation information and first indication information, the first indication information indicates a first bandwidth to the station, and the resource allocation information indicates the first distributed RU that is allocated to the station and that corresponds to the first bandwidth. The first distributed RU includes a plurality of non-contiguous subcarriers in frequency domain. The first bandwidth is a bandwidth of at least one sub-channel occupied by the subcarriers included in the first distributed RU.

It should be noted that, in this application, a distributed RU means that subcarriers included in the RU are discretely distributed in a specific bandwidth range, or a distributed RU includes a plurality of non-contiguous subcarriers in frequency domain, where the non-contiguous subcarriers occupy a bandwidth of at least one sub-channel. In this application, a specific bandwidth range in which the distributed RU allocated to the station is distributed or a bandwidth of at least one sub-channel occupied by the distributed RU is referred to as the first bandwidth. In short, the first bandwidth is a bandwidth range corresponding to the distributed RU allocated to the station. The AP indicates the first bandwidth to the STA, to increase a transmit power of the STA in a maximum bandwidth range supported by the STA, or increase a transmit power of the STA when preamble puncturing is performed on a bandwidth of a PPDU.

It should be noted that, in this application, the access point indicates, to the station via the resource allocation information, the distributed RU allocated to the station in at least two manners.

The first manner is indirect indication. In other words, the access point indicates the first bandwidth via the first indication information, and indicates a contiguous RU to the station via the resource allocation information. After receiving the resource allocation information of the access point, the station discretizes, in the first bandwidth range, the contiguous RU indicated by the resource allocation information, that is, maps the contiguous RU to a distributed RU, to obtain the distributed RU allocated to the station.

The second manner is direct indication. In other words, the access point indicates the first bandwidth via the first indication information, and directly indicates, to the station via the resource allocation information, the distributed RU allocated to the station. After receiving the resource allocation information of the access point, the station directly learns of the distributed RU allocated to the station and the bandwidth of the sub-channel occupied by the subcarriers included in the distributed RU.

In a possible implementation of the first aspect or the second aspect, the trigger frame further includes second indication information, and the second indication information indicates whether an RU allocated to the station is a distributed RU or a contiguous RU. The station may determine, based on the second indication information, that the RU allocated by the access point to the station is a contiguous RU or a distributed RU, and may further learn of, by parsing the resource allocation information (namely, a resource unit allocation subfield), a location of a specific subcarrier in the RU allocated to the station.

In a possible implementation of the first aspect or the second aspect, the first bandwidth is less than or equal to any one of the following bandwidths: a maximum bandwidth supportable by the station, a maximum distributed bandwidth supported by a system, or a bandwidth of a PPDU scheduled by the access point. The maximum distributed bandwidth supported by the system is a maximum bandwidth range, of a distributed RU, allowed by the system. For example, the maximum distributed bandwidth supported by the system is a maximum value of a bandwidth of a PPDU that is defined in the standard. In consideration of cases such as bandwidth puncturing and a limited bandwidth of the station, the first bandwidth cannot exceed a minimum bandwidth in at least two bandwidths of the maximum bandwidth supportable by the station, the maximum distributed bandwidth supported by the system, and the bandwidth of the PPDU scheduled by the access point, to increase the transmit power of the station.

In a possible implementation of the first aspect or the second aspect, the first distributed RU is obtained by mapping a first contiguous RU to the first bandwidth, a second contiguous RU in the first bandwidth is indicated to another station, and when subcarriers included in the second contiguous RU are mapped to a second distributed RU, a bandwidth of at least one sub-channel occupied by the second distributed RU is also the first bandwidth. In other words, a bandwidth of at least one sub-channel occupied by subcarriers separately included in distributed RUs obtained by discretizing a plurality of contiguous RUs in the first bandwidth is still the first bandwidth. Therefore, even if a unified distributed method is used for the plurality of contiguous RUs, the subcarriers that are included in the plurality of discretized contiguous RUs and that are indicated to different stations may not overlap with each other. This avoids a resource conflict, and does not affect discretization, outside the first bandwidth, of a contiguous RU located outside the first bandwidth.

In a possible implementation of the first aspect or the second aspect, when a third contiguous RU that is located outside the first bandwidth and that is indicated to another station is mapped to a third distributed RU, a bandwidth of at least one sub-channel occupied by subcarriers included in the third distributed RU does not overlap the first bandwidth. In other words, a bandwidth of at least one sub-channel occupied by subcarriers included in a distributed RU obtained by discretizing a contiguous RU outside the first bandwidth does not overlap the first bandwidth, to prevent the distributed RU to which the contiguous RU outside the first bandwidth is mapped from occupying subcarriers in the first bandwidth, that is, avoid a resource conflict.

In a possible implementation of the first aspect or the second aspect, the first indication information is located in a common field or a user information list field, and indicates the first bandwidth.

In a possible implementation of the first aspect or the second aspect, the first indication information includes an N-bit bitmap, N is a quantity of sub-channels included in a bandwidth of the PPDU, 1 bit in the N-bit bitmap corresponds to one sub-channel, and the bit indicates whether the corresponding sub-channel is allowed to be distributed across the sub-channel. In this application, whether a sub-channel is allowed to be distributed across the sub-channel means that when one or more contiguous RUs on the sub-channel are mapped to distributed RUs, whether the one or more contiguous RUs are allowed to be distributed across the sub-channel, or whether a bandwidth range of a sub-channel occupied by subcarriers included in the distributed RU crosses the sub-channel. In other words, in this application, whether a sub-channel is allowed to be distributed across the sub-channel means whether the sub-channel is allowed to form a larger distributed bandwidth with another sub-channel. For example, for a 20 MHz sub-channel, a distributed bandwidth corresponding to each RU in the sub-channel that is not allowed to be distributed across 20 MHz is 20 MHz, and a distributed bandwidth corresponding to each RU in the sub-channel that is allowed to be distributed across 20 MHz may be a bandwidth including at least two sub-channels that are allowed to be distributed across 20 MHz. The bitmap indicates whether each sub-channel is allowed to be distributed across the sub-channel, to indirectly indicate a distributed bandwidth range allowed by each sub-channel.

In a possible implementation of the first aspect or the second aspect, the first indication information includes a P-bit bitmap, 1 bit in the P-bit bitmap corresponds to one sub-block, and the sub-block includes a plurality of sub-channels. The bit indicates whether each sub-channel included in the corresponding sub-block is allowed to be distributed across the sub-channel. Each sub-channel in a sub-block is allowed to be distributed across a bandwidth occupied by the sub-block only when each sub-channel in the sub-block is allowed to be distributed across the sub-channel; or each of at least one sub-channel is allowed to be distributed across a bandwidth occupied by a sub-block only when the sub-block includes the at least one sub-channel that is allowed to be distributed across the sub-channel. In this solution, the first bandwidth is indicated in a manner of indicating whether sub-channels in one sub-block are allowed to be distributed across a plurality of sub-block sets. For example, when at least one sub-channel in a sub-block can be distributed across the sub-channel, and the at least one sub-channel is allowed to be distributed across the sub-block, one or more contiguous RUs in any one of the at least one sub-channel may be distributed in a range of the at least one sub-channel. For another example, each sub-channel in a sub-block is allowed to be distributed across the sub-block only when all sub-channels included in the sub-block are allowed to be distributed across the sub-channels. In other words, when one sub-channel in a sub-block is not allowed to be distributed across the sub-channel, any sub-channel in the sub-block is not allowed to be distributed across the sub-block.

In a possible implementation of the first aspect or the second aspect, the first indication information includes an M-bit bitmap, M is an integer greater than or equal to 1, 1 bit in the M-bit bitmap corresponds to one sub-block, and one sub-block includes a plurality of sub-channels. The bit in the M-bit bitmap indicates whether each sub-channel in the corresponding sub-block is allowed to be distributed across the sub-channel. For example, for a 20 MHz sub-channel, when a sub-block includes a sub-channel that is not allowed to be distributed across 20 MHz, a distributed bandwidth corresponding to each sub-channel in the sub-block is 20 MHz. If all sub-channels included in a sub-block are allowed to be distributed across 20 MHz, a distributed bandwidth range corresponding to each sub-channel in the sub-block is a bandwidth occupied by the sub-block. The bit indicates whether the sub-block is allowed to be distributed across 20 MHz, to indirectly indicate whether a distributed bandwidth range corresponding to each sub-channel is 20 MHz or a bandwidth occupied by the sub-block, to save indication overheads.

In a possible implementation of the first aspect or the second aspect, the first indication information further indicates whether two or more sub-blocks are allowed to form a distributed bandwidth. One of the two or more sub-blocks includes a sub-channel that is allowed to be distributed across the sub-channel. Whether the two or more sub-blocks are allowed to form the distributed bandwidth is indicated, to indirectly indicate whether each sub-block can be distributed across the sub-block.

In a possible implementation of the first aspect or the second aspect, the first indication information further includes an S-bit bitmap, 1 bit in the S-bit bitmap corresponds to one sub-block, and the bit indicates whether the corresponding sub-block is allowed to be distributed across the sub-block. It should be understood that a distributed bandwidth range corresponding to a sub-channel included in a sub-block that is not allowed to be distributed across the sub-block is less than a bandwidth occupied by the sub-block. A distributed bandwidth range corresponding to a sub-channel included in a sub-block that is allowed to be distributed across the sub-block may be a bandwidth including at least two sub-channels that are allowed to be distributed across the sub-block. The bitmap indicates whether each sub-channel is allowed to be distributed across the sub-block, to indirectly indicate a distributed bandwidth range corresponding to each sub-channel.

In a possible implementation of the first aspect or the second aspect, the first indication information includes one or more first indices, and one first index corresponds to one sub-block and indicates distributed bandwidth ranges respectively corresponding to sub-channels included in the sub-block. In this solution, distributed bandwidth ranges respectively corresponding to sub-channels in a sub-block may be predefined or pre-configured. One sub-block is associated with one index, so that the index may indicate a distributed bandwidth range corresponding to each sub-channel.

In a possible implementation of the first aspect or the second aspect, sub-channels in a sub-block are allowed to be distributed across the sub-block, and the first indication information indicates distributed bandwidth ranges respectively corresponding to a plurality of sub-blocks included in a bandwidth of the PPDU. Whether a sub-block can be distributed across the sub-block is indicated, to indicate whether the sub-block is allowed to be distributed across a plurality of sub-blocks.

In a possible implementation of the first aspect or the second aspect, the first indication information includes one or more second indices, one second index corresponds to one sub-block, sub-blocks corresponding to second indices with a same value form a distributed bandwidth, and sub-channels included in sub-blocks corresponding to second indices with different values are allowed to be distributed only in the sub-blocks. The index may indicate whether a sub-block can form a distributed bandwidth with another sub-block.

In a possible implementation of the first aspect or the second aspect, the first indication information includes a 2-bit bitmap, and the 2-bit bitmap indicates that the first bandwidth is 20 MHz, 80 MHz, or a bandwidth of the PPDU. In this solution, 1 bit in the 2-bit bitmap may indicate whether all sub-channels are allowed to be distributed across 20 MHz, and the other bit in the 2-bit bitmap may indicate whether all sub-blocks are allowed to be distributed across 80 MHz, to indirectly indicate the first bandwidth corresponding to the station. Therefore, signaling overheads are low.

According to a third aspect, an embodiment of this application provides a communication method in a wireless local area network. The method may be performed by a first communication apparatus. The first communication apparatus may be a communication device or a communication apparatus, for example, a chip system, that can support a communication device in implementing a function required by the method. For example, the first communication apparatus is a first communication device, a chip disposed in a first communication device, or another component configured to implement a function of a first communication device. The following is described by using an example in which the first communication device is an access point (access point, AP).

The method includes: The access point generates a trigger frame, and sends the trigger frame. The trigger frame includes third indication information. The third indication information indicates K resource units RUs, a first RU in the K RUs is mapped to a first distributed RU, and a bandwidth of at least one sub-channel occupied by subcarriers included in the first distributed RU is a first bandwidth. Subcarriers corresponding to a second RU other than the K RUs in a bandwidth of a PPDU belong to subcarriers other than subcarriers included in the K RUs in the bandwidth of the PPDU, and K is an integer greater than or equal to 1.

According to a fourth aspect, an embodiment of this application provides a communication method in a wireless local area network. The method may be performed by a second communication apparatus. The second communication apparatus may be a communication device or a communication apparatus, for example, a chip system, that can support a communication device in implementing a function required by the method. For example, the second communication apparatus is a second communication device, a chip disposed in a second communication device, or another component configured to implement a function of a second communication device. The following is described by using an example in which the second communication device is a station (STA).

The method includes: The station receives a trigger frame sent by an access point, and sends a TB PPDU based on the trigger frame. The trigger frame includes third indication information, the third indication information indicates K RUs, a first RU in the K RUs is mapped to a first distributed RU, and a bandwidth of at least one sub-channel occupied by subcarriers included in the first distributed RU is a first bandwidth. Subcarriers corresponding to a second RU other than the K RUs in a bandwidth of the PPDU belong to subcarriers other than subcarriers included in the K RUs in the bandwidth of the PPDU, and K is an integer greater than or equal to 1.

The first bandwidth corresponding to the first RU is less than a bandwidth of a scheduled PPDU, that is, the first RU in the K RUs is allocated to a bandwidth-limited station. In this solution, remaining available subcarriers in the bandwidth of the PPDU other than subcarriers occupied by an RU allocated to the bandwidth-limited STA may be used as distributed resources and allocated to another STA in a unified manner, for example, a STA supporting a full bandwidth. Therefore, even if an RU allocated to the full-bandwidth STA is located in a distributed bandwidth of the bandwidth-limited STA, the RU of the full-bandwidth STA can still be mapped outside the distributed bandwidth of the bandwidth-limited STA, to increase a transmit power of the full-bandwidth STA.

In a possible implementation of the third aspect or the fourth aspect, the first bandwidth corresponding to the first RU is a bandwidth that can be discretized to a smallest first bandwidth in first bandwidths of RUs allocated to the bandwidth-limited station. In other words, the first bandwidth corresponding to the bandwidth-limited STA is a bandwidth that can be discretized to a smallest first bandwidth in the first bandwidths of the RUs allocated to the bandwidth-limited STA. Therefore, a resource unit allocation index may be reused to indicate the first bandwidth for each STA.

In a possible implementation of the third aspect or the fourth aspect, the third indication information includes K RU allocation indices, an allocation index of the first RU in the K RU allocation indices corresponds to one of R types of first bandwidths, and one type of first bandwidth corresponds to a plurality of RU allocation indices. Alternatively, the third indication information indicates user information field indices separately corresponding to the K RUs. R is an integer greater than or equal to 1. Types or quantities of different first bandwidths are indicated, so that a resource unit allocation subfield may be reused to indicate the first bandwidth of each station based on an order of the R types of first bandwidths.

In a possible implementation of the third aspect or the fourth aspect, the third indication information further indicates whether a first bandwidth corresponding to each user information field is a distributed bandwidth of the bandwidth-limited station. In other words, the user information field indicates whether the station is a bandwidth-limited station, which does not need to be indicated by a common information field in the trigger frame.

According to a fifth aspect, an embodiment of this application provides a communication apparatus. The communication apparatus has a function of implementing a behavior in the method embodiment in any one of the first aspect to the fourth aspect. For beneficial effect, refer to descriptions of the first aspect to the fourth aspect. Details are not described herein again.

The communication apparatus may be an access point, and is configured to perform the method performed by the access point in the first aspect or the third aspect. Alternatively, the communication apparatus may be an apparatus, for example, a chip or a chip system, that can implement the method provided in the first aspect or the third aspect. In a possible design, the communication apparatus includes a corresponding means (means) or module configured to perform the method in the first aspect or the third aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or it may be understood as that the sending unit and the receiving unit are a same functional module. Alternatively, the transceiver unit is understood as a general term of a sending unit and a receiving unit, and the sending unit and the receiving unit may be different functional modules. These units (modules) may perform a corresponding function in the method example of the first aspect or the third aspect. For details, refer to the detailed descriptions in the method example. Details are not described herein again.

The communication apparatus may be a station, and is configured to perform the method performed by the station in the second aspect or the fourth aspect. Alternatively, the communication apparatus may be an apparatus, for example, a chip or a chip system, that can implement the method provided in the second aspect or the fourth aspect. In a possible design, the communication apparatus includes a corresponding means (means) or module configured to perform the method in the second aspect or the fourth aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or it may be understood as that the sending unit and the receiving unit are a same functional module. Alternatively, the transceiver unit is understood as a general term of a sending unit and a receiving unit, and the sending unit and the receiving unit may be different functional modules. These units (modules) may perform a corresponding function in the method example of the second aspect or the fourth aspect. For details, refer to the detailed descriptions in the method example. Details are not described herein again.

According to a sixth aspect, an embodiment of this application provides a communication apparatus. The communication apparatus may perform the method in any one of the first aspect to the fourth aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the communication method in a wireless local area network performed by the station or the access point. The communication interface may be implemented by using an antenna, a feeder, a codec, and the like in the communication apparatus. Alternatively, if the communication apparatus is a chip disposed in an access point or a station, the communication interface may be an input/output interface of the chip, for example, an input/output pin. The communication apparatus may further include a transceiver, used by the communication apparatus to communicate with another device. For example, when the communication apparatus is an access point, the another device is a station. Alternatively, when the communication apparatus is a station, the another device is an access point.

According to a seventh aspect, an embodiment of this application provides a communication apparatus. The communication apparatus includes an input/output interface and a logic circuit. The input/output interface is configured to input and/or output information. The logic circuit is configured to perform the method in any one of the first aspect to the fourth aspect.

According to an eighth aspect, an embodiment of this application provides a chip system. The chip system includes a processor, may further include a memory and/or a communication interface, and is configured to implement the method in any one of the first aspect to the fourth aspect. In a possible implementation, the chip system further includes the memory, configured to store a computer program. The chip system may include a chip, or may include a chip and another distributed component. The communication interface may be an input/output interface of the chip, for example, an input/output pin.

According to a ninth aspect, an embodiment of this application provides a communication system. The communication system includes at least one station and at least one wireless access point. The access point is configured to perform the method performed by the access point in the first aspect, and the station is configured to perform the method performed by the station in the second aspect. Alternatively, the access point is configured to perform the method performed by the access point in the third aspect, and the station is configured to perform the method performed by the station in the fourth aspect.

According to a tenth aspect, this application provides a computer-readable storage medium. The computer-readable storage medium stores a computer program. When the computer program is run, the method in any one of the first aspect to the fourth aspect is implemented.

According to an eleventh aspect, a computer program product is provided. The computer program product includes computer program code. When the computer program code is run, the method in any one of the first aspect to the fourth aspect is performed.

For beneficial effect of the fifth aspect to the eleventh aspect and the implementations of the fifth aspect to the eleventh aspect, refer to descriptions of beneficial effect of the first aspect to the fourth aspect and the implementations of the first aspect to the fourth aspect.

### BRIEF DESCRIPTION OF DRAWINGS

FIG. 1 is a diagram of a network architecture of a wireless local area network (wireless local area network, WLAN) to which an embodiment of this application is applicable;
FIG. 2 is a diagram of RU distribution on 80 MHz according to an embodiment of this application;
FIG. 3A and FIG. 3B are a diagram of a frame structure of a trigger frame in 802.11be;
FIG. 4 is a diagram of a tone plan and RU distribution on 80 MHz according to an embodiment of this application;
FIG. 5 is a diagram of transmission based on preamble puncturing in frequency domain according to an embodiment of this application;
FIG. 6 is a diagram of division of a 6 GHz channel according to an embodiment of this application;
FIG. 7 is a schematic flowchart of a communication method in a wireless local area network according to an embodiment of this application;
FIG. 8 is a diagram of RU distribution on 160 MHz according to an embodiment of this application;
FIG. 9A and FIG. 9B are a diagram of a frame structure of a trigger frame according to an embodiment of this application;
FIG. 10A, FIG. 10B, and FIG. 10C are a diagram of another frame structure of a trigger frame according to an embodiment of this application;
FIG. 11 is a diagram of first bandwidths respectively corresponding to 16 20 MHz sub-channels included in 320 MHz according to an embodiment of this application;
FIG. 12 is a diagram of first bandwidths respectively corresponding to 24 20 MHz sub-channels included in 480 MHz according to an embodiment of this application;
FIG. 13 is a diagram 1 of first bandwidths respectively corresponding to four 80 MHz sub-blocks included in 320 MHz according to an embodiment of this application;
FIG. 14 is a diagram 1 of first bandwidths respectively corresponding to six 80 MHz sub-blocks included in 480 MHz according to an embodiment of this application;
FIG. 15 is a diagram 2 of first bandwidths respectively corresponding to four 80 MHz sub-blocks included in 320 MHz according to an embodiment of this application;
FIG. 16 is a diagram 2 of first bandwidths respectively corresponding to six 80 MHz sub-blocks included in 480 MHz according to an embodiment of this application;
FIG. 17 is a diagram 3 of first bandwidths respectively corresponding to four 80 MHz sub-blocks included in 320 MHz according to an embodiment of this application;
FIG. 18 is a diagram 3 of first bandwidths respectively corresponding to six 80 MHz sub-blocks included in 480 MHz according to an embodiment of this application;
FIG. 19 is a diagram 4 of first bandwidths respectively corresponding to four 80 MHz sub-blocks included in 320 MHz according to an embodiment of this application;
FIG. 20 is a diagram 4 of first bandwidths respectively corresponding to six 80 MHz sub-blocks included in 480 MHz according to an embodiment of this application;
FIG. 21A, FIG. 21B, and FIG. 21C are a diagram of a structure of a trigger frame according to an embodiment of this application;
FIG. 22 is a diagram of a structure of a communication apparatus according to an embodiment of this application;
   and
FIG. 23 is a diagram of another structure of a communication apparatus according to an embodiment of this application.

### DESCRIPTION OF EMBODIMENTS

Technical solutions provided in this application are applicable to a WLAN scenario, for example, the IEEE 802.11 system standards such as the 802.11a/b/g standard, the 802.11n standard, the 802.11ac standard, the 802.11ax standard, a next generation of the 802.11ax standard like the 802.11be standard, Wi-Fi 7, or extreme high throughput (extreme high throughput, EHT), a next generation of 802.11be like Wi-Fi 8, or a next-generation standard. Alternatively, the technical solutions provided in this application are applicable to a wireless local area network system, for example, an Internet of things (Internet of things, IoT) network or a vehicle-to-everything (Vehicle to X, V2X) network. It is clear that the technical solutions provided in this application are further applicable to another possible communication system, for example, a long term evolution (long term evolution, LTE) system, a new radio (new radio, NR) system, another next-generation mobile communication system like a 6th generation (6th generation, 6G) communication system, or another similar communication system.

It may be understood that although embodiments of this application are mainly described by using an example of a deployed WLAN network, especially a network to which the IEEE 802.11 system standard is applied, a person skilled in the art easily understands that various aspects of this application can be extended to other networks that use various standards or protocols, for example, Bluetooth (Bluetooth), a high performance radio LAN (high performance radio LAN, HIPERLAN) (a wireless standard that is similar to the IEEE 802.11 standard, and is mainly used in Europe), a wide area network (WAN), a personal area network (personal area network, PAN), or another known or later developed network. Therefore, regardless of used coverage and a used wireless access protocol, various aspects provided in this application are applicable to any appropriate wireless network.

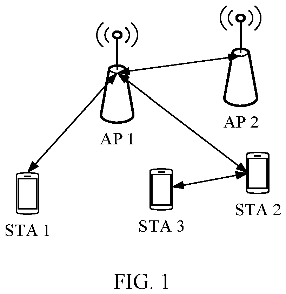

The solutions provided in this application are applicable to communication between one or more APs and one or more STAs, and are also applicable to communication between APs and communication between STAs. For example, FIG. 1 is a diagram of a network architecture of a WLAN to which an embodiment of this application is applicable. FIG. 1 shows an example in which the WLAN includes two wireless access points (access point, AP) and three stations (station, STA). As shown in FIG. 1, the two APs are an AP 1 and an AP 2, and the three STAs are a STA 1, a STA 2, and a STA 3. One AP may be associated with one or more STAs. FIG. 1 shows an example in which the AP 1 is associated with two STAs. For example, the STAs associated with the AP 1 include the STA 1 and the STA 2. Any AP may schedule a radio resource for a STA associated with the AP, and transmit data for the STA on the scheduled radio resource. For example, the AP 1 may schedule a radio resource for the STA 1 and the STA 2, and transmit data, including uplink data information and/or downlink data information, for the STA 1 and the STA 2 on the scheduled radio resource. Any AP may alternatively schedule a radio resource for a STA that is not associated with the AP, and transmit data for the STA on the scheduled radio resource. For example, the AP 1 may schedule a radio resource for the STA 3, and transmit data, including uplink data information and/or downlink data information, for the STA 3 on the scheduled radio resource. It may be understood that quantities of APs and STAs in FIG. 1 are merely examples, and there may be more or fewer APs and STAs.

The AP in embodiments of this application may be an apparatus that provides a wireless communication function for the STA associated with the AP and that is deployed in a wireless communication network. It is clear that the AP may alternatively be deployed outdoors. The AP is equivalent to a bridge that connects a wired network and a wireless network. The AP is mainly used to connect wireless network clients together, and then connect the wireless network to the Ethernet. The AP may serve as a hub of a communication system, and may be a communication device with a Wi-Fi chip, for example, a base station, a router, a gateway, a repeater, a communication server, a switch, or a bridge. The base station may include a macro base station, a micro base station, a relay station, and the like in various forms. Herein, for ease of description, the devices mentioned above are collectively referred to as APs. In addition, the AP may support WLAN standards such as the 802.11be standard or a next generation of 802.11be like Wi-Fi 8. The AP may also support WLAN standards such as 802.11ax, 802.11ac, 802.11n, 802.11g, 802.11b, and 802.11a.

In embodiments of this application, a communication apparatus configured to implement a function of the AP may be an AP, or may be an apparatus that can support the AP in implementing the function, for example, a chip system. The apparatus may be installed in the AP. In the technical solutions provided in embodiments of this application, an example in which an apparatus configured to implement the function of the AP is an AP is used to describe the technical solutions provided in embodiments of this application.

The STA in embodiments of this application may be a wireless communication chip, a wireless sensor, or a user terminal, a user apparatus, an access apparatus, a subscriber station, a subscriber unit, a mobile station, a user agent, user equipment or another name that has a wireless communication function. The user terminal may include various devices having a wireless communication function, for example, a handheld device, a vehicle-mounted device, a wearable device, a computing device, another processing device connected to a wireless modem, user equipment (user equipment, UE) in various forms, a mobile station (mobile station, MS), a terminal (terminal), a terminal device (terminal device), a portable communication device, a handheld device, a portable computing device, an entertainment device, a game device or system, a global positioning system device, or any other suitable device configured to perform network communication through a wireless medium. For example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, and a computer that supports a Wi-Fi communication function. For example, the STA may be a router, a switch, a bridge, or the like. Herein, for ease of description, the devices mentioned above are collectively referred to as stations or STAs. Optionally, the STA may support the 802.11be standard. The station may alternatively support a plurality of WLAN standards of the 802.11 family, for example, 802.11ax, 802.11ac, 802.11n, 802.11g, 802.11b, 802.11a, 802.11be, Wi-Fi 7, Wi-Fi 8, or a next-generation standard of Wi-Fi 8. If the various STAs described above are located in a vehicle (for example, placed in the vehicle or mounted in the vehicle), the STAs may be all considered as vehicle-mounted terminal devices. For example, the vehicle-mounted terminal device is also referred to as an on-board unit (on-board unit, OBU). Alternatively, the STA in this application may be a vehicle-mounted module, a vehicle-mounted assembly, a vehicle-mounted component, a vehicle-mounted chip, or a vehicle-mounted unit that is built in a vehicle as one or more parts or units. The vehicle may implement a method in this application through the built-in STA.

In embodiments of this application, a communication apparatus configured to implement a function of the STA may be a STA, or may be an apparatus that can support the STA in implementing the function, for example, a chip system. The apparatus may be installed in the STA. In the technical solutions provided in embodiments of this application, an example in which an apparatus configured to implement the function of the STA is a STA is used to describe the technical solutions provided in embodiments of this application. It may be understood that the STA in embodiments of this application is a non-access point STA (non-AP STA). An access point STA (AP STA) is considered as an AP.

Different STAs support different maximum bandwidths due to different capabilities of the STAs. For example, a maximum bandwidth supported by some STAs is 20 MHz, and a maximum bandwidth supported by some STAs is 80 MHz. A STA that can support a maximum bandwidth of 20 MHz is also referred to as a 20 MHz-only STA (20 MHz-only STA). Similarly, a STA that can support a maximum bandwidth of 80 MHz is also referred to as an 80 MHz-only STA (80 MHz-only STA). A STA that can support a maximum bandwidth of 160 MHz is referred to as a 160 MHz-only STA. It should be noted that, in addition to supporting the maximum bandwidth (namely, 80 MHz), the 80 MHz-only STA also supports a bandwidth smaller than 80 MHz like 20 MHz or 40 MHz. The STA may actually operate on a bandwidth (which is referred to as a maximum operating bandwidth in this specification) that is smaller than a maximum bandwidth that can be supported, to save energy. For example, the 80 MHz-only STA may operate in a maximum operating bandwidth of 20 MHz in a specific time period. Correspondingly, the STA in the time period is referred to as a 20 MHz-only operating STA (20 MHz-only operating STA). In embodiments of this application, a STA that supports a maximum bandwidth less than a bandwidth of a PPDU is referred to as a bandwidth-limited STA. Compared with the bandwidth-limited STA, a STA that supports a maximum bandwidth reaching the bandwidth of the PPDU is referred to as a full-bandwidth STA. For example, the bandwidth of the PPDU is 80 MHz, and the 80 MHz-only STA is a full-bandwidth STA instead of a bandwidth-limited STA.

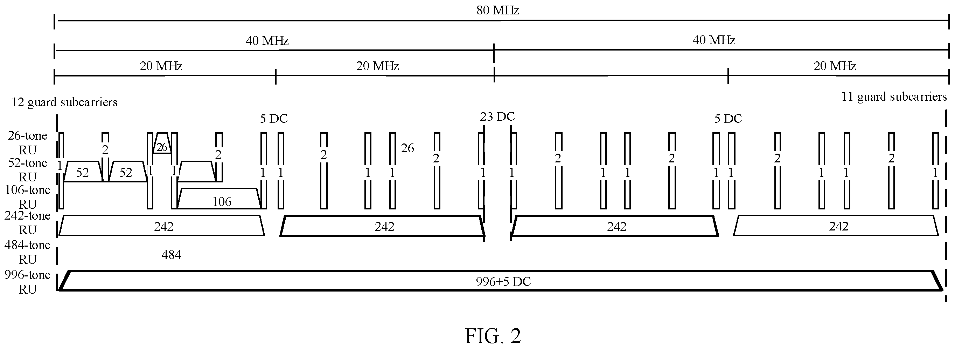

The IEEE 802.11ax protocol specifies that a spectral bandwidth may be divided into a plurality of types of RUs with different sizes for 20 MHz, 40 MHz, 80 MHz, and 160 MHz that include, for example, a 26-tone RU, a 52-tone RU, a 106-tone RU, a 242-tone RU (a largest RU in a 20 MHz bandwidth), a 484-tone RU (a largest RU in a 40 MHz bandwidth), a 996-tone RU (a largest RU in an 80 MHz bandwidth), and a 2*996-tone RU (a largest RU in a 160 MHz bandwidth). In addition to the 26-tone RU, the 52-tone RU, and the like that are used to transmit data, the entire bandwidth further includes another subcarrier, for example, one or more of a guard (guard) subcarrier, a null subcarrier, a direct current (direct current, DC) subcarrier, and a pilot subcarrier. For ease of description, in this application, the RU is collectively denoted as an X-tone RU y. The X-tone RU y indicates that the X-tone RU is a y^{th} X-tone RU in the bandwidth of the PPDU. For example, FIG. 2 is a diagram of RU distribution in an 80 MHz bandwidth. In FIG. 2, RUs with different sizes are independently numbered in ascending order of frequencies. As shown in FIG. 2, the 80 MHz bandwidth is sequentially divided into a 52-tone RU 1, a 52-tone RU 2, a 26-tone RU 5, a 106-tone RU 2, a 242-tone RU 2, a 242-tone RU 3, and a 242-tone RU 4 in ascending order of frequencies. The 52-tone RU 1 indicates a 1^{st} 52-tone RU, the 52-tone RU 2 indicates a 2^{nd} 52-tone RU, the 26-tone RU 5 indicates a 5^{th} 26-tone RU, the 106-tone RU 2 indicates a 2^{nd} 106-tone RU, the 242-tone RU 2 indicates a 2^{nd} 242-tone RU 2, and the rest can be deduced by analogy.

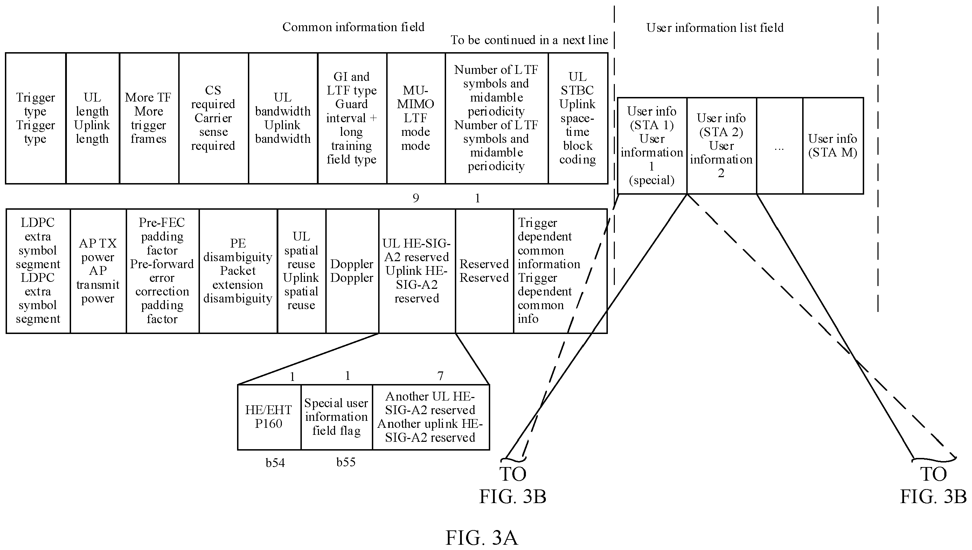

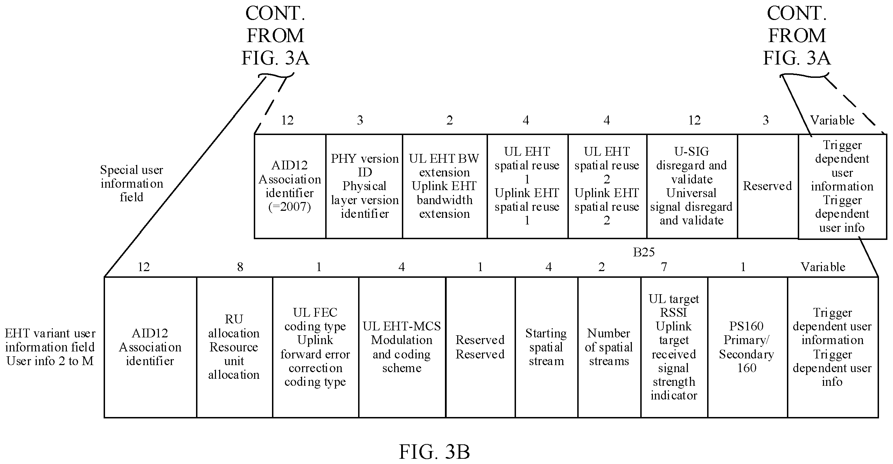

The AP may notify, via a trigger frame, the STA of an RU allocated by the AP to the STA, so that the STA performs data transmission on the allocated RU. FIG. 3A and FIG. 3B are a diagram of a frame structure of a trigger frame in 802.11be. As shown in FIG. 3A and FIG. 3B, the trigger frame includes a common information (common information) field and a user information list (user information list) field. The common information field includes common information that needs to be read by all STAs. The common information field may include an AP transmit power (AP TX power) field and an uplink spatial reuse (UL spatial reuse) field. The user information list field includes one or more user information fields, and one user information field includes information that one STA needs to read. In the user information list field, an association identifier 12 (association identifier 12, AID12) indicates an association identifier of a STA, and a resource unit allocation (RU allocation) subfield and a primary/secondary 160 (Primary/Secondary 160, PS160) subfield together indicate a location of a specific resource unit allocated to the STA (the STA indicated by the AID12).

After receiving the trigger frame from the AP, the STA parses the trigger frame to obtain a user information field that matches (or is the same as) the association identifier of the STA, and then sends an extremely high-throughput trigger-based physical layer protocol data unit (extremely high-throughput trigger-based physical layer protocol data unit, EHT TB PPDU) on an RU indicated by the resource unit allocation subfield in the user information field. After receiving the EHT TB PPDU sent by STA, the AP returns an acknowledgment frame to the STA.

In a low power indoor (low power indoor, LPI) communication manner in a 6 GHz spectrum, a transmit power of a device is limited by both a maximum power and maximum power spectral density. For example, Table 1 shows a correspondence between maximum transmit powers of devices (including an AP and a STA) and bandwidths in an LPI scenario.

**Table 1**

| Bandwidth | Maximum transmit power of an AP | Maximum transmit power of a STA |
|---|---|---|
| 20 MHz | 18 dBm | 12 dBm |
| 40 MHz | 21 dBm | 15 dBm |
| 80 MHz | 24 dBm | 18 dBm |
| 160 MHz | 27 dBm | 21 dBm |
| 320 MHz | 30 dBm | 24 dBm |

As shown in Table 1, as the bandwidth increases, the transmit power of the device also increases accordingly. However, limited by the maximum power spectral density, an actual transmit power of the device is lower. Therefore, when the power spectral density is limited, a corresponding transmit bandwidth may be expanded to implement a larger transmit power of the device. Expanding the transmit bandwidth means mapping a plurality of subcarriers included in a contiguous RU to a larger bandwidth, so that the subcarriers included in the RU become more distributed in frequency domain, and a frequency range of the plurality of subcarriers is greater than a frequency range occupied by the original contiguous RU. It may be considered that expanding the transmit bandwidth is actually a process of discretizing contiguous subcarriers.

In this application, that subcarriers included in one contiguous RU are mapped to a distributed RU means that there is a correspondence or a mapping relationship between the contiguous RU and the distributed RU.

The contiguous RU is an RU including a plurality of contiguous subcarriers, and the subcarriers are spaced by only one or more of a guard subcarrier, a null subcarrier, or a direct current subcarrier. For example, a 26-tone RU including a group of 13 contiguous subcarriers and another group of 13 contiguous subcarriers is a contiguous RU. All RUs supported in the 802.11ax may be understood as contiguous RUs. In this application, a contiguous RU including K subcarriers may also be referred to as a contiguous K-tone RU. For example, a contiguous 26-tone RU is a contiguous RU including 26 subcarriers. In other words, a concept of the contiguous K-tone RU is the same as a concept of a K-tone RU in the existing 802.11ax standard. In addition, the contiguous RU in this application includes a multiple resource unit (multiple resource unit, MRU). For ease of description, the MRU is considered as an entire RU in this application. In subsequent embodiments, the RU is mainly used as an example for description.

The distributed RU includes a plurality of subcarriers that are distributed in frequency domain. In other words, the distributed RU includes a plurality of subcarrier groups, and any two subcarrier groups are distributed in frequency domain. One subcarrier group includes one or more contiguous subcarriers. A name of the distributed RU is not limited in this application. For example, the distributed RU may also be referred to as a distributed RU (distributed RU, DRU). In this application, a distributed RU including K subcarriers may be referred to as a distributed K-tone RU. For example, a distributed 26-tone RU is a distributed RU including 26 subcarriers. For a value of K, refer to a value of K for a contiguous RU. It is clear that the value of K may be different from the value of K for the contiguous RU. For example, when the bandwidth is 20 MHz, the 20 MHz bandwidth may include a combination of one or more of a distributed 26-tone RU, a distributed 52-tone RU, a distributed 106-tone RU, or a distributed 242-tone RU.

A distributed RU obtained by discretizing a contiguous RU is a distributed RU that has a mapping relationship with the contiguous RU, and the distributed RU may be referred to as a distributed RU corresponding to the contiguous RU. Correspondingly, the contiguous RU is a contiguous RU occupied by the distributed RU.

Although subcarriers allocated to the station are not increased, the distributed RU is allocated to the station, or the station maps, to the distributed RU, the contiguous RU indicated to the station. Therefore, the subcarriers allocated to the station become more distributed in frequency domain, and occupy a larger bandwidth, and the station can support a larger transmit power. It should be understood that, in this application, subcarriers included in an RU are distributed in frequency domain, and a bandwidth of a sub-channel occupied by the subcarriers is referred to as a distributed bandwidth. In this application, the distributed bandwidth may also be referred to as a distributed bandwidth corresponding to the distributed RU, a distributed bandwidth of the distributed RU, or a distributed bandwidth occupied by the distributed RU.

For example, for a 26-tone RU in 20 MHz, 26 contiguous subcarriers included in the RU may be mapped to 40 MHz, sub-channels occupied by the distributed 26-tone RU are 40 MHz, and a distributed bandwidth occupied by the distributed 26-tone RU is 40 MHz.

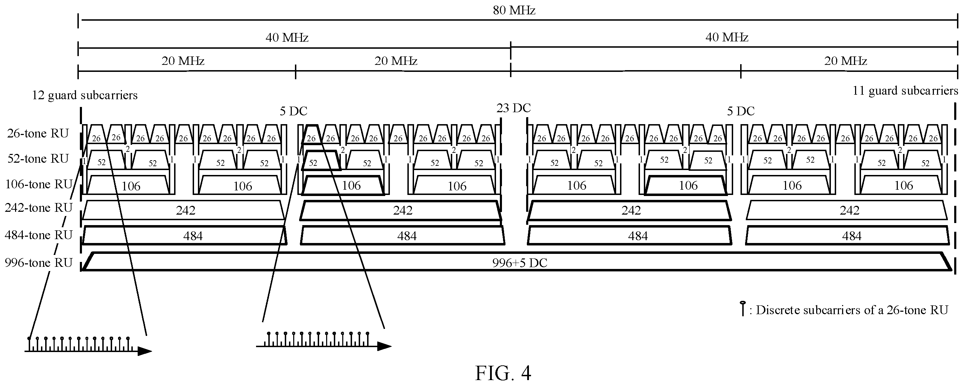

For example, FIG. 4 is a diagram of RU distribution in an 80 MHz bandwidth. FIG. 4 shows a case in which subcarriers of one 26-tone RU are discretized into two groups of subcarriers. As shown in FIG. 4, the 26-tone RU may be divided, based on subcarrier indices, into two sub-RUs: a sub-RU including odd-numbered subcarriers and a sub-RU including even-numbered subcarriers, and then the two sub-RUs are distributed to different 20 MHz bandwidths, to obtain a distributed 26-tone RU. In other words, a plurality of contiguous RUs corresponding to the distributed 26-tone RU are a 1^{st} contiguous 26-tone RU in a 1^{st} 20 MHz bandwidth and a 1^{st} contiguous 26-tone RU in a 2^{nd} 20 MHz bandwidth. The contiguous 26-tone RU occupies a bandwidth of about 2 MHz, and after discretization, the 26-tone RU occupies a bandwidth of about 4 MHz.

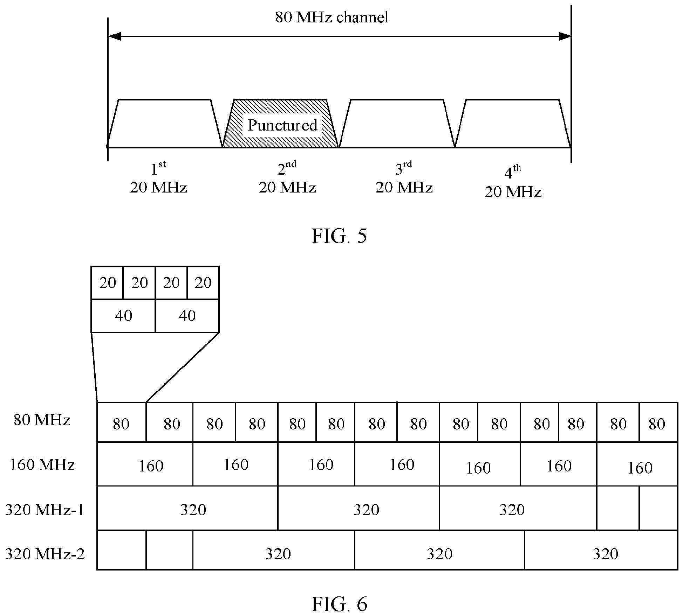

In some scenarios, even if the contiguous RU is discretized based on a method similar to that in FIG. 4, the transmit power of the device cannot be increased. For example, for the bandwidth-limited STA, if some subcarriers included in a contiguous RU are mapped to a bandwidth outside a bandwidth supported by the STA when the contiguous RU is mapped to a distributed RU, the bandwidth-limited STA cannot use the RU, and a transmit power of the STA cannot be increased. For another example, a part of the bandwidth of the PPDU cannot be used. If some subcarriers included in a contiguous RU are mapped to the part of the bandwidth when the subcarriers are mapped to a distributed RU, the RU cannot be used, and the transmit power of the device cannot be increased. That some bandwidths cannot be used includes that the bandwidths are punctured. For example, FIG. 5 is a diagram of transmission based on preamble puncturing in frequency domain. In FIG. 5, four bandwidths are sorted in ascending order of frequencies. As shown in FIG. 5, in an 80 MHz bandwidth, a 2^{nd} 20 MHz bandwidth is punctured and cannot be used, but a 1^{st} 20 MHz bandwidth, a 3^{rd} 20 MHz bandwidth, and a 4^{th} 20 MHz bandwidth that are not punctured may still be used.

In this application, the sub-channel is a frequency range, and the bandwidth of the PPDU may include a plurality of sub-channels. A bandwidth of one sub-channel may be 20 MHz, 40 MHz, 80 MHz, or the like. FIG. 6 is a diagram of division of a 6 GHz channel. In the 802.11 system, a 20 MHz sub-channel (sub-channel) is used as a basic unit of a channel. In other words, a 20 MHz bandwidth includes one sub-channel, a 40 MHz bandwidth includes two sub-channels, an 80 MHz bandwidth includes four sub-channels, a 160 MHz bandwidth includes eight sub-channels, and a 320 MHz bandwidth includes 16 sub-channels. In addition, to prevent excessive interference between different channels, in 5 GHz or 6 GHz, it is clearly specified that 40 MHz channels do not overlap with each other. In other words, a 1^{st} 20 MHz channel and a 2^{nd} 20 MHz channel form a 1^{st} 40 MHz channel, a 3^{rd} 20 MHz channel and a 4^{th} 20 MHz channel form a 2^{nd} 40 MHz channel, and the rest can be deduced by analogy. The 2^{nd} 20 MHz channel and the 3^{rd} 20 MHz channel cannot form a 40 MHz channel. Because 320 MHz is scarce, the standard allows a 1^{st} 160 MHz channel and a 2^{nd} 160 MHz channel to form a 320 MHz-1 channel, and allows the 2^{nd} 160 MHz channel and a 3^{rd} 160 MHz channel to form a 320 MHz-2 channel. In embodiments of this application, a bandwidth of at least one sub-channel is a bandwidth occupied by the at least one sub-channel. For example, a bandwidth of one 20 MHz sub-channel is 20 MHz, and a bandwidth of two 20 MHz sub-channels is 40 MHz. In this application, an example in which a bandwidth of one sub-channel is 20 MHz is used.

In this application, a sub-block (sub-block) is a set of a plurality of sub-channels, that is, one sub-block may include a plurality of sub-channels. A quantity of sub-channels included in the sub-block is not limited in embodiments of this application. For example, one sub-block includes four sub-channels. In ascending order of absolute frequencies, every four 20 MHz sub-channels form one 80 MHz sub-block.

In this application, the AP may indicate a bandwidth (for example, referred to as a first bandwidth) to the STA, and the first bandwidth is a bandwidth range corresponding to a distributed RU allocated to the STA. The AP indicates the first bandwidth to the STA, so that the STA can determine the bandwidth range in which subcarriers included in the allocated distributed RU are distributed. For example, for the bandwidth-limited STA, the first bandwidth may be a maximum bandwidth supported by the STA, that is, a maximum bandwidth supportable by the station and in which subcarriers included in a distributed RU allocated to the bandwidth-limited STA are distributed, to increase a transmit power of the bandwidth-limited STA in the supported bandwidth range. For another example, when the bandwidth of the PPDU is punctured, the first bandwidth may be a bandwidth outside the punctured bandwidth, to prevent the subcarriers included in the RU of the STA from being distributed in the punctured bandwidth. In this way, when the bandwidth of the PPDU is punctured, the transmit power of the STA can be increased.

The first bandwidth may be determined based on one or more of the following bandwidths: a maximum bandwidth supported by the STA, a maximum distributed bandwidth supported by a system, and a bandwidth of a PPDU scheduled by the AP. The maximum bandwidth supported by the STA is determined based on a capability of the STA. For example, a maximum bandwidth supported by the 20 MHz-only STA is 20 MHz, and a maximum bandwidth supported by the 80 MHz-only STA is 80 MHz. The maximum distributed bandwidth supported by the system is a bandwidth of at least one sub-channel occupied by subcarriers included in a distributed RU supported by the system at most.

For example, a maximum bandwidth supported by the system is 80 MHz, but the system does not allow an RU in a sub-channel to be distributed across 20 MHz. In this case, subcarriers included in a discretized RU occupy the 20 MHz sub-channel at most, and the maximum distributed bandwidth supported by the system is 20 MHz.

If the system allows the sub-channel to be distributed across 20 MHz but does not allow the sub-channel to be distributed across 80 MHz, the maximum distributed bandwidth supported by the system is 80 MHz. It should be noted that, in this application, whether an RU in a sub-channel is allowed to be distributed across the sub-channel or a larger sub-channel is referred to as whether the sub-channel is allowed to be distributed across the sub-channel or a larger sub-channel. For example, whether an RU in a sub-channel is allowed to be distributed across 20 MHz is referred to as whether the sub-channel is allowed to be distributed across 20 MHz. Whether an RU in a sub-channel is allowed to be distributed across 80 MHz is referred to as whether the sub-channel is allowed to be distributed across 80 MHz.

For example, the first bandwidth may be less than or equal to any one of the foregoing three bandwidths. For example, the first bandwidth is less than or equal to the maximum bandwidth supported by the STA, the first bandwidth is less than or equal to the maximum distributed bandwidth supported by the system, or the first bandwidth is less than or equal to the bandwidth of the PPDU scheduled by the AP. It should be understood that the bandwidth of the PPDU scheduled by the AP may also be referred to as a bandwidth of a trigger-based PPDU (TB PPDU) that is sent by the STA triggered by the AP.

For example, the first bandwidth is less than or equal to a smaller bandwidth in the maximum distributed bandwidth supported by the system and the bandwidth of the PPDU scheduled by the AP; the first bandwidth is less than or equal to a smaller bandwidth in the maximum bandwidth supported by the STA and the maximum distributed bandwidth supported by the system; or the first bandwidth is less than or equal to a smaller bandwidth in the bandwidth of the PPDU scheduled by the AP and the maximum bandwidth supported by the system.

For example, the first bandwidth is less than or equal to a smallest bandwidth in the maximum bandwidth supported by the STA, the maximum distributed bandwidth supported by the system, and the bandwidth of the PPDU scheduled by the AP.

Optionally, the first bandwidth is a largest value of possible values, so that the STA obtains a maximum transmit power.

It is considered that the bandwidth of the PPDU may be punctured, and a bandwidth-limited STA and a full-bandwidth STA may coexist, to avoid overlapping of subcarriers included in distributed RUs of different STAs, the AP may allocate RUs to the STAs according to one or more of the following rules:
Rule 1: A plurality of contiguous RUs are separately mapped to a plurality of distributed RUs, and the plurality of distributed RUs correspond to a same distributed bandwidth, that is, a bandwidth of a sub-channel occupied by subcarriers included in each of the plurality of distributed RUs is the same. For example, a distributed bandwidth supported by a bandwidth-limited STA 1 is the first bandwidth, a first contiguous RU is allocated to the STA 1, and the first contiguous RU is mapped to the first bandwidth, to obtain a first distributed RU. A second contiguous RU in the first bandwidth is allocated to a STA 2. When the second contiguous RU is mapped to a second distributed RU, the second distributed RU is also distributed in a range of the first bandwidth. In other words, the first distributed RU and the second distributed RU correspond to the same distributed bandwidth. Even if a unified distributed manner is used for the plurality of contiguous RUs, because the contiguous RUs are discretized in the same bandwidth range, subcarriers that are included in the plurality of discretized contiguous RUs do not overlap with each other, and discretization of a contiguous RU located outside the first bandwidth is not affected.

For example, the bandwidth of the PPDU is 80 MHz. As shown in FIG. 2, the 80 MHz bandwidth is sequentially divided into the 52-tone RU 1, the 52-tone RU 2, the 26-tone RU 5, the 106-tone RU 2, the 242-tone RU 2, the 242-tone RU 3, and the 242-tone RU 4. If the 1^{st} 52-tone RU is allocated to a 20 MHz-only STA, it is indicated to the STA that the first bandwidth is 20 MHz, indicating that the 52-tone RU 1 allocated to the STA is distributed in the 20 MHz range. The 52-tone RU 2, the 26-tone RU 5, and the 106-tone RU 2 in the 20 MHz bandwidth are also distributed in the 20 MHz range, that is, a distributed bandwidth corresponding to the 52-tone RU 2, the 26-tone RU 5, or the 106-tone RU 2 is also 20 MHz.

It should be understood that sizes of distributed bandwidths corresponding to different bandwidth-limited STAs may be the same or may be different. For example, the distributed bandwidth corresponding to the bandwidth-limited STA 1 is a bandwidth A1, an RU allocated to the STA 1 is in a 1^{st} 20 MHz bandwidth, and the bandwidth A1 may be the 1^{st} 20 MHz bandwidth. The distributed bandwidth corresponding to the bandwidth-limited STA 2 is a bandwidth A2, an RU allocated to the STA 2 is in a 2^{nd} 20 MHz bandwidth, and the bandwidth A2 may be the 2^{nd} 20 MHz bandwidth. A size of the bandwidth A1 is the same as a size of the bandwidth A2.

Rule 2: A bandwidth of at least one sub-channel occupied by subcarriers included in a contiguous RU that is located outside a distributed bandwidth supported by a bandwidth-limited STA and that is allocated to another STA does not overlap the distributed bandwidth. For example, the distributed bandwidth of the bandwidth-limited STA is the first bandwidth, a first contiguous RU is allocated to the bandwidth-limited STA, and the first contiguous RU is mapped to the first bandwidth, to obtain a first distributed RU. In this case, the first bandwidth does not overlap a bandwidth of at least one sub-channel occupied by subcarriers included in a third contiguous RU that is located outside the first bandwidth and that is allocated to another STA. The foregoing example is still used. A distributed bandwidth corresponding to the 242-tone RU 2 cannot overlap a 1^{st} 20 MHz bandwidth. This can avoid a conflict caused by overlapping of subcarriers included in a distributed RU allocated to the bandwidth-limited STA and subcarriers included in a distributed RU allocated to the full-bandwidth STA.

Rule 3: A contiguous RU corresponding to a sub-channel is not allowed to be mapped to a distributed RU across the sub-channel, that is, subcarriers included in the distributed RU obtained by discretizing the contiguous RU in the sub-channel are distributed in the sub-channel, which is referred to as that a sub-channel is not allowed to be distributed across the sub-channel. In this case, an example in which a sub-channel is 20 MHz is used. Even if the maximum bandwidth supported by the bandwidth-limited STA is greater than 20 MHz, when a contiguous RU allocated to the STA belongs to a 20 MHz sub-channel, the contiguous RU is distributed only in the 20 MHz range, or subcarriers included in a distributed RU allocated to the STA are distributed in the 20 MHz range, that is, the distributed bandwidth of the STA is 20 MHz.

Rule 4: A contiguous RU corresponding to a sub-channel is allowed to be mapped to a distributed RU across the sub-channel, and the contiguous RU corresponding to the sub-channel is not allowed to be distributed across a sub-block, which is referred to as that a sub-channel is allowed to be distributed across the sub-channel, and the sub-channel is not allowed to be distributed across a sub-block. In other words, subcarriers included in the distributed RU obtained by discretizing the contiguous RU in the sub-channel may be distributed in a bandwidth range of the sub-block. Similarly, an example in which the sub-channel is 20 MHz and the sub-block is 80 MHz is used. In this case, even if the maximum distributed bandwidth supported by the STA is greater than or equal to 80 MHz, the subcarriers included in the distributed RU allocated to the STA cannot cross 80 MHz, and can be distributed only in the 80 MHz range. For example, one sub-block includes a sub-channel 1, a sub-channel 2, a sub-channel 3, and a sub-channel 4 in ascending order of frequencies. The sub-channel 1 is not allowed to be distributed across 20 MHz. The sub-channel 2, the sub-channel 3, and the sub-channel 4 are allowed to be distributed across 20 MHz, but none of the sub-channel 2, the sub-channel 3, and the sub-channel 4 is allowed to be distributed across 80 MHz, and a distributed bandwidth corresponding to one or more RUs in the sub-channel 2, the sub-channel 3, and the sub-channel 4 may be 80 MHz.

Optionally, it may be agreed upon in a protocol whether a plurality of sub-channels that are distributed across the sub-channels are allowed to jointly form a distributed bandwidth. The foregoing example is still used. If the plurality of sub-channels that are distributed across the sub-channels are allowed to jointly form the distributed bandwidth, a distributed bandwidth corresponding to one or more RUs in the sub-channel 2 and the sub-channel 3 may be 40 MHz, and the distributed bandwidth corresponding to the one or more RUs in the sub-channel 2, the sub-channel 3, and the sub-channel 4 may be 60 MHz.

Rule 5: A contiguous RU corresponding to a sub-channel is allowed to be mapped to a distributed RU across a sub-block to which the sub-channel belongs. In other words, subcarriers included in the distributed RU obtained by discretizing the contiguous RU in the sub-channel may be distributed in a bandwidth range greater than a bandwidth range of the sub-block to which the sub-channel belongs, which is referred to as that a sub-channel is allowed to be distributed across a sub-block to which the sub-channel belongs. For example, if the sub-block is 80 MHz, when the RU corresponding to the sub-channel is allowed to be mapped to the distributed RU, the subcarriers included in the distributed RU are distributed in a distributed bandwidth greater than 80 MHz, for example, distributed in a bandwidth range of 160 MHz or 320 MHz.

Rule 6: A contiguous RU corresponding to a sub-channel is allowed to be mapped to a distributed RU across a sub-block set, which is referred to as whether a sub-channel is allowed to be distributed across a sub-block set or a plurality of sub-blocks. For example, each sub-channel in a sub-block is allowed to be distributed across the sub-block only when all sub-channels included in the sub-block are allowed to be distributed across the sub-channels; otherwise, the sub-channel in the sub-block is not allowed to be distributed across the sub-block. For example, the sub-block is 80 MHz, and the sub-channel is 20 MHz. The bandwidth of the PPDU includes a sub-block 1, a sub-block 2, a sub-block 3, and a sub-block 4 in ascending order of frequencies. The sub-block 1 and the sub-block 3 each include a sub-channel that is not allowed to be distributed across 20 MHz, all sub-channels included in the sub-block 2 are allowed to be distributed across 20 MHz, and all sub-channels included in the sub-block 4 are also allowed to be distributed across 20 MHz. It can be learned according to the rule 6 that, when a contiguous RU in a sub-channel in the sub-block 1 is mapped to a distributed RU, the contiguous RU is allowed to be distributed only in the sub-block 1, and a distributed bandwidth corresponding to the distributed RU is a bandwidth of the sub-block 1. This is the same for the sub-block 3. When a contiguous RU in a sub-channel in the sub-block 2 or the sub-block 4 is mapped to a distributed RU, a distributed bandwidth corresponding to the distributed RU may be 160 MHz, which is referred to as that a distributed bandwidth corresponding to the sub-channel is 160 MHz.

Rule 7: At least one sub-channel is allowed to be distributed across a sub-block provided that the sub-block includes the at least one sub-channel that is allowed to be distributed across the sub-channel, where a distributed bandwidth is a sum of bandwidths of a plurality of sub-channels that are allowed to be distributed across the sub-channels. For example, when the sub-block includes one or two sub-channels that are allowed to be distributed across the sub-channels, the one or two sub-channels are allowed to be distributed across the sub-block. For example, the sub-block is 80 MHz, and the sub-channel is 20 MHz. The bandwidth of the PPDU includes a sub-block 1, a sub-block 2, a sub-block 3, and a sub-block 4 in ascending order of frequencies. All sub-channels included in the sub-block 1 and the sub-block 2 are allowed to be distributed across 20 MHz, none of sub-channels included in the sub-block 3 is not allowed to be distributed across 20 MHz, one sub-channel in the sub-block 4 is not allowed to be distributed across 20 MHz, and the other three sub-channels in the sub-block 4 are allowed to be distributed across 20 MHz. In this case, the distributed bandwidth corresponding to the sub-channel that is allowed to be distributed across 20 MHz may be 220 MHz.

Rule 8: Two or more sub-blocks are allowed to jointly form a distributed bandwidth, and one of the two or more sub-blocks includes a sub-channel that is allowed to be distributed across 20 MHz. It may also be understood as whether an RU in at least one sub-channel that is allowed to be distributed across 20 MHz and that is included in a sub-block and an RU in another sub-block can be jointly distributed.

The AP may allocate a distributed RU to each STA based on the rule 1 to the rule 8. As described above, the AP may directly or indirectly indicate, to the STA, the distributed RU allocated to the STA. For the STA, if the distributed RU is allocated to the STA in a manner of indirectly indicating a contiguous RU, the STA needs to know a bandwidth range in which the contiguous RU is discretized to obtain the distributed RU. Therefore, the AP needs to indicate, to the STA, a distributed bandwidth (which is referred to as the first bandwidth in this application) corresponding to the distributed RU allocated to the STA. It is clear that when directly indicating the distributed RU to the STA to allocate the distributed RU to the STA, the AP may also indicate, to the STA, the distributed bandwidth corresponding to the distributed RU. In this application, indicating, to the station, the distributed bandwidth corresponding to the distributed RU allocated to the station is referred to as indicating the distributed bandwidth (which is referred to as the first bandwidth in this application) corresponding to the station. In this application, that the AP indicates the first bandwidth to the STA may also be considered as that the AP indicates the distributed bandwidth or a distributed granularity to the STA, or the AP indicates an expanded bandwidth or an expanded granularity to the STA.

To facilitate understanding of the solutions provided in this application, the following describes, with reference to the accompanying drawings, how the AP indicates, to the STA, the first bandwidth and the first distributed RU corresponding to the first bandwidth. The first distributed RU may be obtained by discretizing, in the first bandwidth, the contiguous RU allocated by the AP to the STA, or may be a distributed RU that is located in the first bandwidth and that is allocated by the AP to the STA. It may be understood that the first distributed RU includes a plurality of non-contiguous subcarriers in frequency domain. The first bandwidth is a bandwidth of at least one sub-channel occupied by the subcarriers included in the first distributed RU.

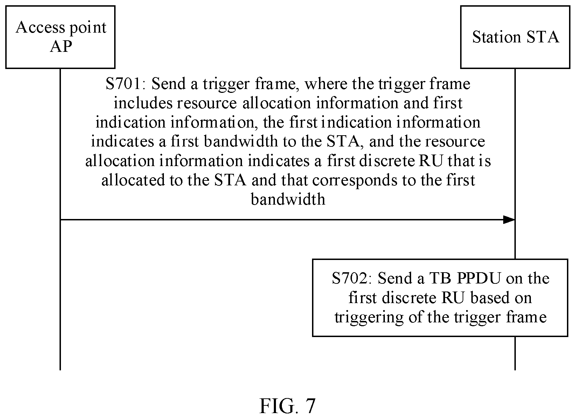

FIG. 7 is a schematic flowchart of a communication method in a wireless local area network according to an embodiment of this application. The procedure is described in the following.

S701: An AP sends a trigger frame to a STA, and correspondingly, the STA receives the trigger frame sent by the AP, where the trigger frame includes resource allocation information and first indication information, the first indication information indicates a first bandwidth to the STA, and the resource allocation information indicates a first distributed RU that is allocated to the STA and that corresponds to the first bandwidth.

S702: The STA sends a TB PPDU on the first distributed RU based on triggering of the trigger frame. It should be noted that sending the TB PPDU on the first distributed RU means sending the TB PPDU on the distributed RU and/or a sub-channel corresponding to the distributed RU in a broad sense.

The AP may still use a current RU indication manner, that is, use a resource unit allocation subfield (RU allocation subfield) to indicate, to the STA, a resource unit allocated to the STA. For example, the resource allocation information is carried in the resource unit allocation subfield, and indicates the first distributed RU allocated by the AP to the STA. The AP may directly indicate the first distributed RU via the resource unit allocation subfield, or may indirectly indicate the first distributed RU. A specific indication manner is not limited in embodiments of this application. That the AP directly or indirectly indicates the first distributed RU falls within the coverage of "the resource allocation information indicates the first distributed resource unit RU that is allocated to the station and that corresponds to the first bandwidth" described in this application.

In the direct indication manner, the AP indicates the first bandwidth via the first indication information, and indicates, to the STA, the first distributed RU via the resource allocation unit subfield.

The distributed RU may be represented by a sequential number of a subcarrier. In embodiments of this application, the sequential number of the subcarrier in the distributed RU may be pre-defined. For example, a sequential number of a subcarrier in a distributed RU in a form similar to that in attached Table 1 is defined. The AP may indicate the first distributed RU to the STA based on the defined sequential number of the subcarrier in the distributed RU. It should be noted that a sequential number of each subcarrier may be a subcarrier number of the subcarrier in a corresponding actual frequency band, or may be customized. In embodiments of this application, a specific implementation form of a sequential number of a subcarrier is not limited.

Alternatively, the sequential number of the subcarrier in the distributed RU may be obtained according to a mapping rule between a contiguous RU and the distributed RU. For example, a sequence (which is referred to as an original subcarrier sequence) of sequential numbers of subcarriers corresponding to the contiguous RU is mapped to a sequence (which is referred to as a target subcarrier sequential number sequence) of sequential numbers of subcarriers in the distributed RU. In other words, the sequential numbers in the original subcarrier sequential number sequence are mapped to corresponding elements in the target subcarrier sequential number sequence one by one. For example, the distributed RU is distributed in 80 MHz, and all subcarriers in the distributed RU are sequentially distributed at an interval of 13 subcarriers, that is, the subcarriers in the distributed RU are mapped at the interval of 13 subcarriers. For example, a sequential number of a subcarrier is a subcarrier number of the subcarrier in a corresponding actual frequency band. Corresponding sequential numbers of subcarriers in a 1^{st} 26-tone RU in 80 MHz are [-499: -474], where there are 26 subcarriers in total. For the 26 subcarriers, a 1^{st} subcarrier with a sequential number of -499 is mapped, and then the subcarriers are mapped at the interval of 13 subcarriers until all subcarriers included in the 1^{st} 26-tone RU are mapped. Then, a 2^{nd} 26-tone RU continues to be mapped, and corresponding sequential numbers of subcarriers in the 2^{nd} 26-tone RU are [-473: -448]. The rest can be deduced by analogy. When a subcarrier exceeds a rightmost limit, for example, exceeds 494, a subcarrier with a sequential number of -498 continues to be mapped. When a null subcarrier exists between RUs, for example, [-447, -446] between the 2^{nd} 26-tone RU and the 3^{rd} 26-tone RU, mapping may also be performed at the interval of 13 subcarriers.

The AP may allocate an RU to the STA via the resource unit allocation subfield. The RU may be a contiguous RU, or may be a distributed RU. Therefore, when allocating a resource to the STA, the AP may further notify the STA that the RU allocated by the AP to the STA is a contiguous RU or a distributed RU. In other words, the AP notifies the STA to parse the resource unit allocation subfield according to a rule of the contiguous RU or the distributed RU. A manner in which the AP notifies the STA whether the RU is a contiguous RU or a distributed RU is implemented by including second indication information in the trigger frame. The second indication information may indicate that the RU allocated by the AP to the STA is a contiguous RU or a distributed RU. Alternatively, the second indication information may indicate, to the STA, that an RU allocation manner is a contiguous RU or a distributed RU. The STA may determine, based on the second indication information, that the RU allocated by the AP to the STA is a contiguous RU or a distributed RU, and may further learn of, by parsing the resource unit allocation subfield, a location of a specific subcarrier in the RU allocated to the STA. It is clear that, in this application, that the RU allocated by the AP to the STA is a contiguous RU or a distributed RU may be pre-defined, and does not need to be indicated by the second indication information. In addition, the AP allocates a distributed RU to the STA, and the STA may also determine, based on a location of a specific subcarrier of the distributed RU, that the RU allocated by the AP to the STA is a distributed RU. In this case, the AP does not need to indicate, to the STA, that the RU allocated to the STA is a contiguous RU or a distributed RU. Therefore, the second indication information is not necessary.

In the indirect indication manner, the AP indicates, to the STA, the first bandwidth via the first indication information, and indicates a first contiguous RU via the resource allocation information. After receiving the resource allocation information, the STA discretizes the first contiguous RU in the first bandwidth, to obtain the first distributed RU.

For example, a mapping relationship (or a mapping rule) between the contiguous RU and the distributed RU may be pre-defined, and the STA maps the first contiguous RU to the first bandwidth based on the mapping relationship, to obtain the first distributed RU. In the indirect indication manner, the trigger frame sent by the AP to the STA may also include the second indication information, and the second indication information indicates the STA to map, to the distributed RU, the first contiguous RU allocated to the STA.

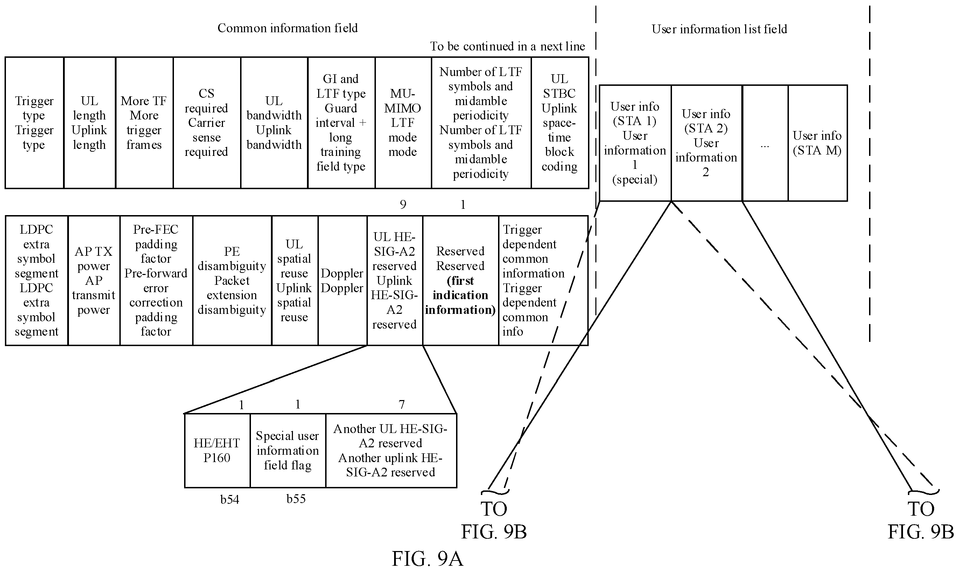

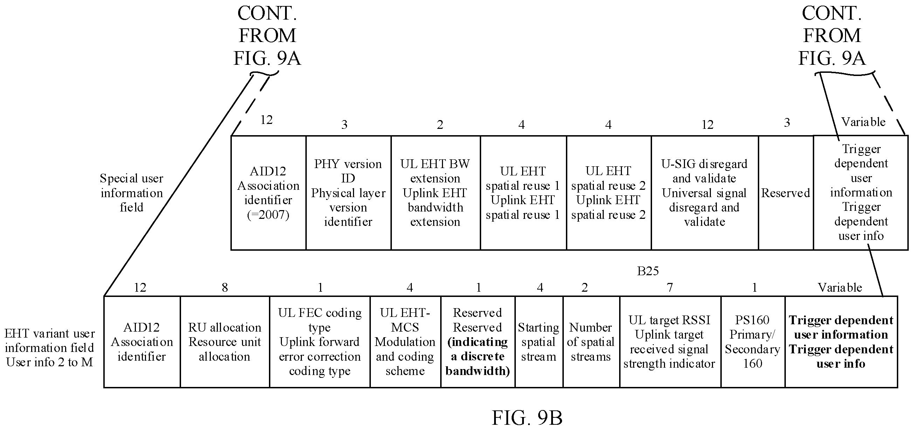

According to the foregoing eight rules, there are also a plurality of manners in which the AP indicates the first bandwidth to the STA. A specific manner is not limited in embodiments of this application. The first indication information may be carried in a reserved bit (as shown in FIG. 9A and FIG. 9B) in a common information field, or a reserved bit in an uplink high efficiency signal field A (uplink high efficiency signal field A2, UL HE-SIG-A2). Alternatively, the first indication information may be carried in a trigger dependent common field, a reserved bit in a special user information field, or a newly defined field. This is not limited in embodiments of this application. It should be understood that, on the premise of the rule 1 and the rule 2, the AP may indicate the first bandwidth to the STA according to one or more of the rule 3 to the rule 8.

Indication manner 1: The AP may indicate the first bandwidth from a pre-defined distributed bandwidth set. For example, the distributed bandwidth set includes one or more bandwidths of 20 MHz, 40 MHz, 80 MHz, 160 MHz, and 320 MHz. It should be noted that a quantity and sizes of bandwidths actually included in the distributed bandwidth set are not limited in embodiments of this application. For example, the distributed bandwidth set may further include 60 MHz, 120 MHz, 240 MHz, 480 MHz, and 640 MHz.

It is assumed that it is specified that any RU cannot be distributed across a sub-block, that is, a maximum distributed bandwidth supported by a system is a bandwidth occupied by the sub-block. In consideration of a maximum bandwidth supported by a bandwidth-limited STA, for example, a bandwidth occupied by one sub-channel, the distributed bandwidth set may include the maximum bandwidth supported by the bandwidth-limited STA and the bandwidth occupied by the sub-block. For example, the sub-channel is 20 MHz, and the sub-block is 80 MHz. The distributed bandwidth set may include 20 MHz and 80 MHz. The first indication information may be 1-bit information, and indicates, to the STA, that the first bandwidth is 20 MHz. For example, a value "1" of the 1 bit indicates that the first bandwidth is 20 MHz, and correspondingly, a value "0" of the 1 bit indicates that the first bandwidth is 80 MHz (this is used as an example in this specification). Alternatively, a value "0" of the 1 bit indicates that the first bandwidth is 20 MHz, and a value "1" of the 1 bit indicates that the first bandwidth is 80 MHz. Alternatively, the distributed bandwidth set may include the maximum bandwidth supported by the bandwidth-limited STA and a bandwidth less than the bandwidth occupied by the sub-block. For example, the distributed bandwidth set includes 20 MHz and 40 MHz. The first indication information occupies 1 bit, to indicate that the first bandwidth is 20 MHz or 40 MHz.

It should be noted that an RU/MRU whose size is greater than or equal to 996 tones may not be distributed by default. It may also be understood that a bandwidth occupied by a discretized RU/MRU whose size is greater than or equal to 996 tones is equal to a bandwidth occupied by a contiguous RU before discretization. In other words, that the 996-tone RU is distributed in 80 MHz is equivalent to being not distributed. In other words, if a size of an RU/MRU (that is, a quantity of subcarriers included in the RU/MRU) is greater than or equal to a quantity of subcarriers included in the distributed bandwidth, it indicates by default that the RU/MRU is not distributed. For the RU/MRU whose size is greater than or equal to 996 tones, the AP may indicate whether a distributed bandwidth corresponding to the RU/MRU is 80 MHz or a bandwidth of the PPDU. It should be noted that, when it is indicated that a contiguous RU is not distributed or it is indicated that a distributed bandwidth of the contiguous RU is equal to a bandwidth occupied by the contiguous RU, the AP and the STA perform transmission on the contiguous RU.

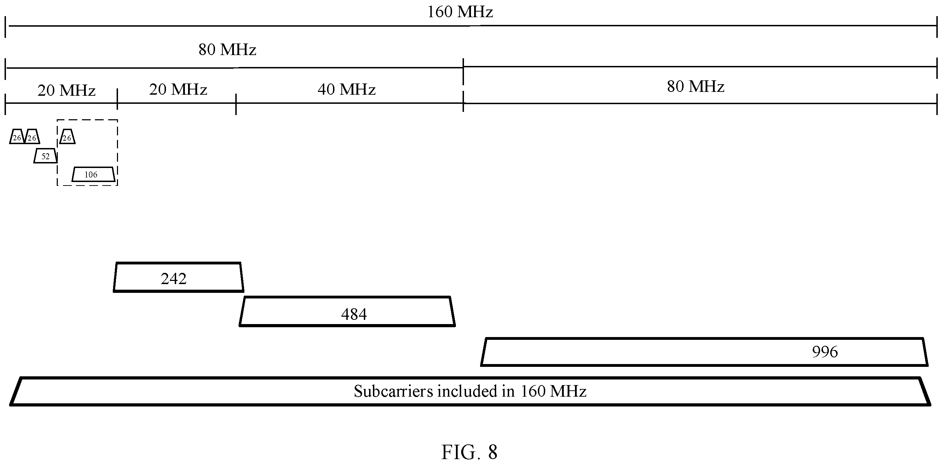

For example, FIG. 8 is a diagram of RU distribution in 160 MHz. The 160 MHz bandwidth is divided into a 26-tone RU 1, a 26-tone RU 2, a 52-tone RU 2, a (106+26)-tone RU 1, a 242-tone RU 2, a 484-tone RU 2, and a 996-tone RU 2 in ascending order of frequencies (a guard subcarrier, a DC subcarrier, and the like are not shown in FIG. 8). The (106+26)-tone RU 1 (shown by a dashed line in FIG. 8) is an MRU whose size is 106 tones. The 26-tone RU 1, namely, a 1^{st} 26-tone RU, is allocated to a 20 MHz-only STA. According to the rule 1, the rule 2, and the rule 4, the AP may indicate, to the 20 MHz-only STA via the first indication information, that the first bandwidth is 20 MHz. For example, a value indicated by the first indication information is "1", to indicate that the first bandwidth corresponding to the STA is 20 MHz. For the STA, the 20 MHz bandwidth may be considered by default as 20 MHz in which the 1^{st} 26-tone RU is located, namely, a 1^{st} 20 MHz bandwidth.

It can be learned according to the rule 1 that a distributed bandwidth corresponding to another RU (namely, the 26-tone RU 2, 52-tone RU 2, and the (106+26)-tone RU) in the 1^{st} 20 MHz bandwidth is also 20 MHz. If the other three RUs in the 20 MHz bandwidth are further allocated to another STA, the AP indicates, to the another STA according to the rule 1, that the distributed bandwidth is also 20 MHz. It can be learned according to the rule 2 that a distributed bandwidth corresponding to the 242-tone RU 2 cannot overlap the 1^{st} 20 MHz bandwidth. If the 242-tone RU 2 is allowed to be distributed in a bandwidth range outside the 1^{st} 20 MHz bandwidth, the AP indicates, to a STA 2, that the distributed bandwidth may be a 60 MHz bandwidth. If the STA 2 is a bandwidth-limited STA, for example, a 20 MHz-only STA, and an RU in the 242-tone RU 2 is allocated to the STA 2, the AP indicates, to the STA 2, that the distributed bandwidth is a 20 MHz bandwidth to which the RU belongs, namely, a 2^{nd} 20 MHz bandwidth. It may be understood that, in this case, it may be considered that the 242-tone RU 2 is not distributed. It can be learned according to the rule 1, the rule 2, and the rule 4 that a distributed bandwidth corresponding to the 484-tone RU 2 is 40 MHz. The AP may indicate, to the STA to which an RU in the 484-tone RU 2 is allocated, that the distributed bandwidth is 40 MHz. A distributed bandwidth corresponding to the 996-tone RU 2 is 80 MHz, and the AP may indicate, to the STA to which an RU in the 996-tone RU 2 is allocated, that the distributed bandwidth is 80 MHz.

It is assumed that it is specified that any RU can be distributed across a sub-block, that is, the maximum distributed bandwidth supported by the system is the bandwidth of the PPDU. In consideration of the maximum bandwidth supported by the bandwidth-limited STA, for example, a bandwidth occupied by one sub-channel, the distributed bandwidth set may include the maximum bandwidth supported by the bandwidth-limited STA and the bandwidth of the PPDU. For example, the sub-channel is 20 MHz. The distributed bandwidth set may include 20 MHz and the bandwidth of the PPDU. The first indication information may occupy 1 bit, to indicate that the first bandwidth is 20 MHz or the bandwidth of the PPDU. When the bandwidth of the PPDU is 20 MHz, the first bandwidth is 20 MHz by default. The first indication information may occupy at least one bit, and the at least one bit may be reserved or indicate any value. In other words, the first bandwidth is 20 MHz by default.

It is clear that the first indication information may alternatively occupy a plurality of bits, to indicate distributed bandwidths of more sizes. For example, the pre-defined distributed bandwidth set includes 20 MHz, 40 MHz, and 80 MHz, the first indication information may occupy 2 bits, and one status value of the 2 bits corresponds to one distributed bandwidth. For another example, the pre-defined distributed bandwidth set includes all possible bandwidths such as 20 MHz, 40 MHz, 80 MHz, 160 MHz, and 320 MHz, the first indication information may occupy 3 bits, and one status value of the 3 bits corresponds to one distributed bandwidth.

It may be understood that, for a case in which discretization cannot be performed on the bandwidth of the PPDU due to puncturing, the foregoing method for indicating the first bandwidth to the STA via the first indication information is also applicable. For example, 320 MHz is divided into 242-tone 1-x-484-tone 2-996-tone 3-996-tone 4-996-tone 5, where x indicates a punctured 242-tone RU or a 20 MHz sub-channel. It is assumed that the 242-tone RU 1 is distributed in a 1^{st} 20 MHz bandwidth, the 484-tone RU 2 is distributed in 40 MHz, the 996-tone RU 3 is distributed in corresponding 80 MHz, and the 996-tone RU 4 and the 996-tone RU 5 are distributed in corresponding 80 MHz+80 MHz. In this case, distributed bandwidths corresponding to RUs are sequentially 20 MHz (not distributed), 40 MHz (not distributed), 80 MHz (not distributed), 160 MHz, and 160 MHz.

When a plurality of sub-channels that are allowed to be distributed across 20 MHz jointly form a distributed bandwidth, the AP may further indicate which sub-channels form the distributed bandwidth. For example, the sub-channel is 20 MHz. When three sub-channels are allowed to be distributed across 20 MHz, the AP may indicate that the distributed bandwidth is 60 MHz. In this case, the AP further needs to indicate which 20 MHz bandwidths are included in the 60 MHz. For example, the bandwidth of the PPDU is 80 MHz, that is, there are four sub-channels. Four status values (or entries) may indicate different types of 60 MHz bandwidths. For example, there are four cases: "0111", "1011", "1101", and "1110", where 1 indicates that the 60 MHz bandwidth includes three 20 MHz sub-channels, and 0 indicates another 20 MHz sub-channel.

Indication manner 2: The AP may indicate a distributed bandwidth corresponding to each sub-channel, to indirectly indicate the first bandwidth to the STA. For example, if a sub-channel is not allowed to be distributed across the sub-channel, a distributed bandwidth corresponding to a contiguous RU on the sub-channel is a bandwidth occupied by the sub-channel. If a contiguous RU allocated to the STA belongs to the sub-channel, a distributed bandwidth corresponding to the STA is the bandwidth occupied by the sub-channel. Similarly, the AP may indicate whether a sub-block is allowed to be distributed across the sub-block, to indirectly indicate the first bandwidth to the STA. The following uses a specific example to describe how the AP indicates the first bandwidth to the STA. In the following, an example in which a sub-channel is 20 MHz and a sub-block is 80 MHz is used.

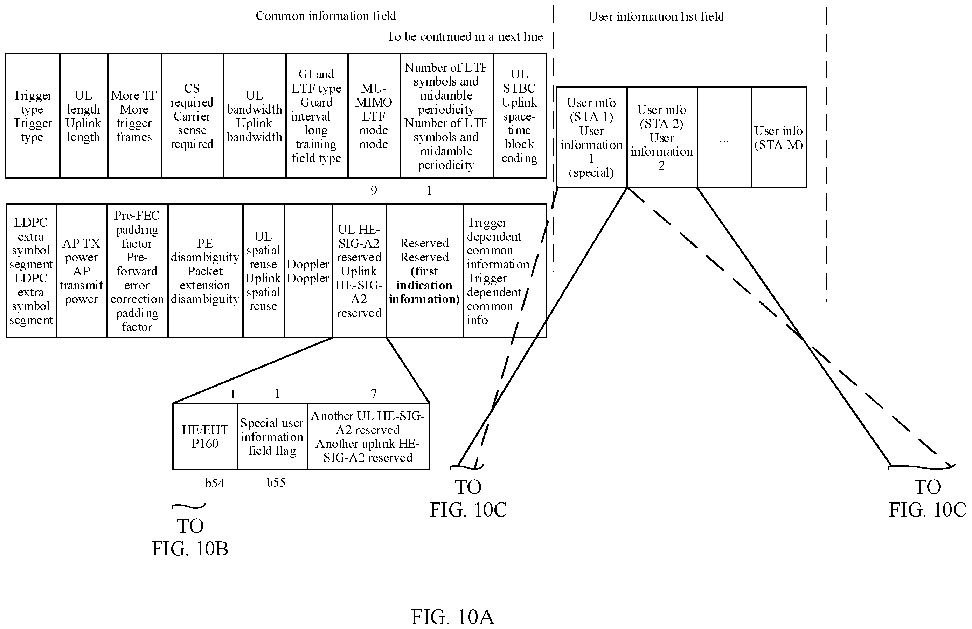

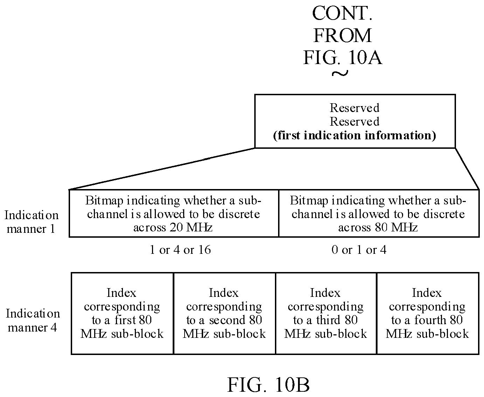

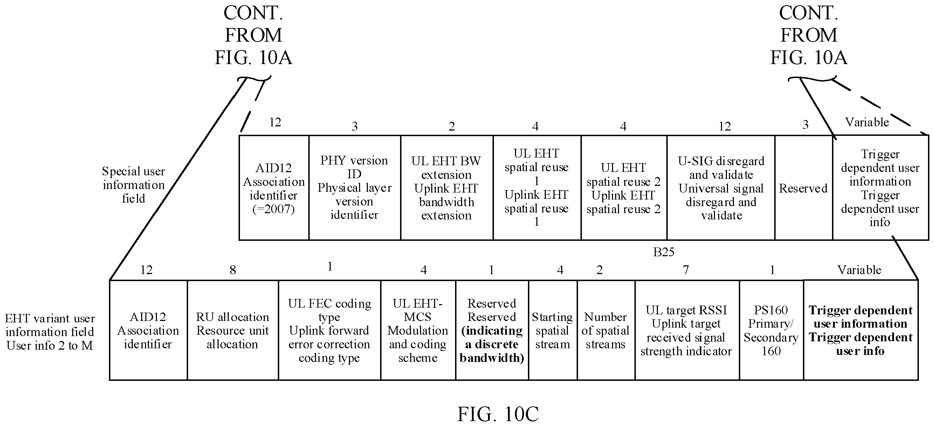

Example 1: According to the rule 3 and rule 4, the first indication information may include an N-bit bitmap, N is a quantity of sub-channels included in a bandwidth of the PPDU, 1 bit in the N-bit bitmap corresponds to one sub-channel, and a sub-channel corresponding to a value 1 of the bit in the N-bit bitmap is allowed to be distributed across the sub-channel, and a sub-channel corresponding to a value 0 of the bit in the N-bit bitmap is not allowed to be distributed across the sub-channel (this is used as an example in this specification). Alternatively, on the contrary, a sub-channel corresponding to a value 0 of the bit in the N-bit bitmap is allowed to be distributed across the sub-channel, and a sub-channel corresponding to a value 1 of the bit in the N-bit bitmap is not allowed to be distributed across the sub-channel. In the indication manner 1 shown in FIG. 10A, FIG. 10B, and FIG. 10C, the first indication information may include the N-bit bitmap indicating whether a sub-channel is allowed to be distributed across the sub-channel.

A distributed bandwidth corresponding to each of a plurality of sub-channels corresponding to a plurality of "1s" may be a bandwidth including one or more of the plurality of sub-channels. For example, a distributed bandwidth corresponding to any one of two 20 MHz sub-channels corresponding to two "1s" may be 20 MHz or 40 MHz. Optionally, four 20 MHz sub-channels are one 80 MHz sub-block, and a plurality of sub-channels, in the sub-block, that are allowed to be distributed across 20 MHz may form a distributed bandwidth of 40 MHz, 60 MHz, or 80 MHz. Specifically, the distributed bandwidth corresponding to each of the plurality of sub-channels corresponding to the plurality of "1s" may be specified. For example, the distributed bandwidth corresponding to each of the plurality of sub-channels corresponding to the plurality of "1s" may be specified as 20 MHz. The distributed bandwidth corresponding to each of the plurality of sub-channels corresponding to the plurality of "1s" may be specified as a bandwidth occupied by the plurality of sub-channels. For example, a distributed bandwidth corresponding to any one of two 20 MHz sub-channels corresponding to two "1s" is 40 MHz, and a distributed bandwidth corresponding to any one of two 20 MHz sub-channels corresponding to three "1s" is 60 MHz.

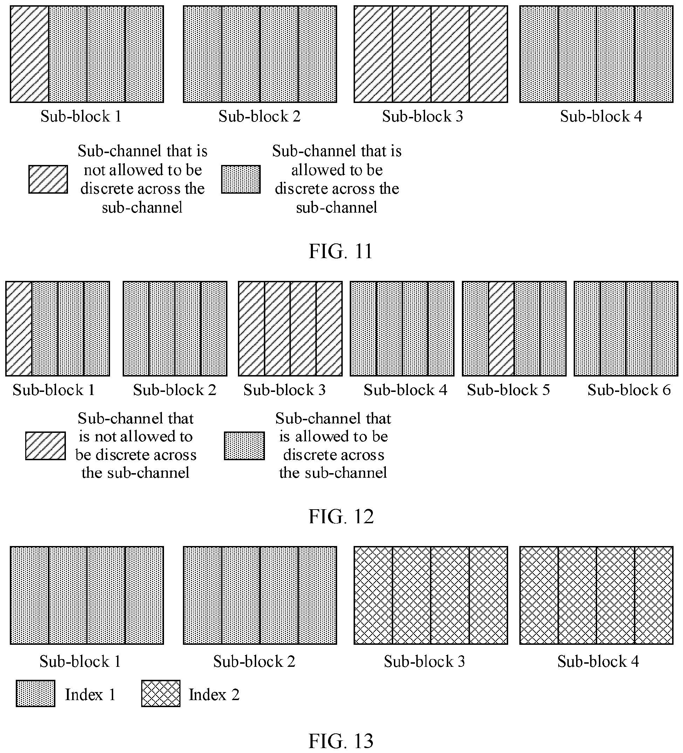

It is assumed that types of agreed distributed bandwidths include 20 MHz and 80 MHz. For example, FIG. 11 shows distributed bandwidths respectively corresponding to 16 20 MHz sub-channels included in 320 MHz. In FIG. 11, an example in which four sub-blocks are included and each sub-block includes four sub-channels is used. As shown in FIG. 11, N is 16, that is, the first indication information may be a 16-bit bitmap, and the 16-bit bitmap is "0111 1111 0000 1111". The first indication information indicates that a distributed bandwidth corresponding to a 1^{st} sub-channel is 20 MHz, a distributed bandwidth corresponding to each of a 2^{nd} sub-channel to a 4^{th} sub-channel is 20 MHz, a distributed bandwidth corresponding to each of a 5^{th} sub-channel to an 8^{th} sub-channel may be 80 MHz, and a distributed bandwidth corresponding to each of a 9^{th} sub-channel to a 12^{th} sub-channel is 20 MHz. A distributed bandwidth corresponding to each of a 13^{th} sub-channel to a 16^{th} sub-channel may be 80 MHz. When the RU allocated to the STA is located on the 1^{st} sub-channel, the first indication information indicates, to the STA, that the first bandwidth is 20 MHz. When the RU allocated to the STA is located on the 2^{nd} sub-channel, the first indication information indicates, to the STA, that the first bandwidth may be 20 MHz. When the RU allocated to the STA is located on the 5^{th} sub-channel, the first indication information indicates, to the STA, that the first bandwidth may be 80 MHz.

For another example, FIG. 12 shows distributed bandwidths respectively corresponding to 24 20 MHz sub-channels included in 480 MHz. In FIG. 10A, FIG. 10B, and FIG. 10C, an example in which four sub-blocks are included and each sub-block includes four sub-channels is used. As shown in FIG. 12, N is 24, that is, the first indication information may be a 24-bit bitmap, and the 24-bit bitmap is "0111 1111 0000 1111 1011 0000". The first indication information indicates that a distributed bandwidth corresponding to a 1^{st} sub-channel is 20 MHz, a distributed bandwidth corresponding to each of a 2^{nd} sub-channel to a 4^{th} sub-channel is 20 MHz, a distributed bandwidth corresponding to each of a 5^{th} sub-channel to an 8^{th} sub-channel may be 80 MHz, a distributed bandwidth corresponding to each of a 9^{th} sub-channel to a 12^{th} sub-channel is 20 MHz, a distributed bandwidth corresponding to each of a 13^{th} sub-channel to a 16^{th} sub-channel may be 80 MHz, a distributed bandwidth corresponding to each of a 17^{th} sub-channel to a 20^{th} sub-channel may be 20 MHz, and a distributed bandwidth corresponding to each of a 21^{st} sub-channel to a 24^{th} sub-channel may be 80 MHz. Similarly, the STA may determine a location and a size of the first bandwidth based on a location of the allocated RU.

It is assumed that types of agreed distributed bandwidths include 20 MHz, 40 MHz, and 80 MHz. For example, a distributed bandwidth corresponding to each of the 2^{nd} sub-channel and the 3^{rd} sub-channel may be 40 MHz. When the AP indicates, to the STA via the first indication information, that the first bandwidth is 40 MHz, the AP may further indicate, to the STA, sub-channels included in 40 MHz. Similarly, it is assumed that types of agreed distributed bandwidths include 20 MHz, 60 MHz, and 80 MHz. For example, a distributed bandwidth corresponding to each of the 2^{nd} sub-channel and the 3^{rd} sub-channel may be 60 MHz. When the AP indicates, to the STA via the first indication information, that the first bandwidth is 60 MHz, the AP may further indicate, to the STA, sub-channels included in 60 MHz. Specifically, for how the AP indicates, to the STA, sub-channels included in 40 MHz or 60 MHz, refer to the manner of indicating sub-channels included in 60 MHz in the foregoing indication manner 1.

Example 2: According to the rule 3 and rule 4, the first indication information may include an M-bit bitmap, and 1 bit in the M-bit bitmap corresponds to one sub-block. Each sub-channel in a sub-block corresponding to a value 1 of the bit in the M-bit bitmap is allowed to be distributed across the sub-channel, and each sub-channel in a sub-block corresponding to a value 0 of the bit in the M-bit bitmap is not allowed to be distributed across the sub-channel (this is used as an example in this specification). Alternatively, each sub-channel in a sub-block corresponding to a value 0 of the bit in the M-bit bitmap is allowed to be distributed across the sub-channel, and each sub-channel in a sub-block corresponding to a value 1 of the bit in the M-bit bitmap is not allowed to be distributed across the sub-channel. The example in FIG. 11 is still used, M=4, the first indication information is a 4-bit bitmap, and the 4-bit bitmap is "0101". Correspondingly, the first indication information indicates that both a sub-block 2 and a sub-block 4 are allowed to be distributed across 20 MHz, and a distributed bandwidth corresponding to each sub-channel in the sub-block 2 and the sub-block 4 is 80 MHz. A distributed bandwidth corresponding to each sub-channel in a sub-block 1 and a sub-block 3 is 20 MHz. The example in FIG. 12 is still used, M=6, the first indication information is a 6-bit bitmap, and the 6-bit bitmap is "010101". Correspondingly, the first indication information indicates that the sub-block 2, the sub-block 4, and the sub-block 6 are allowed to be distributed across 20 MHz, and a distributed bandwidth corresponding to each sub-channel in the sub-block 2, the sub-block 4, and the sub-block 6 is 80 MHz. A distributed bandwidth corresponding to each sub-channel in a sub-block 1, a sub-block 3, and a sub-block 5 is 20 MHz. For example, when the RU allocated to the STA belongs to a sub-channel in the sub-block 1, the first indication information indicates, to the STA, that the first bandwidth is 20 MHz. When the RU allocated to the STA belongs to a sub-channel in the sub-block 2, the first indication information indicates, to the STA, that the first bandwidth is a bandwidth of the sub-block 2, namely, 80 MHz. In this indication manner, because M is the quantity of sub-blocks, the first indication information occupies a small quantity of bits, and occupies low overheads.

In the example 1 and the example 2, according to the rule 5, the AP may indicate whether a sub-channel is allowed to be distributed across a sub-block, to indirectly indicate the first bandwidth to the STA. For example, the first indication information may further include an S-bit bitmap, 1 bit in the S-bit bitmap corresponds to one sub-block, and the bit indicates whether the corresponding sub-block is allowed to be distributed across the sub-block. In the indication manner 1 shown in FIG. 10A, FIG. 10B, and FIG. 10C, the first indication information may include the S-bit bitmap indicating whether a sub-block is allowed to be distributed across 80 MHz. A sub-channel corresponding to a value 1 of the bit in the S-bit bitmap is allowed to be distributed across the sub-block, and a sub-channel corresponding to a value 0 of the bit in the S-bit bitmap is allowed to be distributed across the sub-block (this is used as an example in this specification). Alternatively, a sub-channel corresponding to a value 0 of the bit in the S-bit bitmap is allowed to be distributed across the sub-block, and a sub-channel corresponding to a value 1 of the bit in the S-bit bitmap is allowed to be distributed across the sub-block. The example in FIG. 11 is still used. The first indication information is "0111 1111 0000 1111 0101". For explanations of first 16 bits in the first indication information, refer to the explanations in the example 1. Last 4 bits indicate that sub-channels in the sub-block 1 and the sub-block 3 are not allowed to be distributed across the sub-block, and sub-channels in the sub-block 2 and the sub-block 4 are allowed to be distributed across the sub-block. If the RU allocated to the STA belongs to the 2^{nd} sub-channel, the first indication information indicates to the STA that the first bandwidth may be a bandwidth occupied by the 2^{nd} sub-channel to the 4^{th} sub-channel, namely, 60 MHz.

Example 3: According to the rule 8, the AP may further indicate whether two or more sub-blocks are allowed to form the distributed bandwidth, to indirectly indicate the first bandwidth to the STA. One of the two or more sub-blocks includes a sub-channel that is allowed to be distributed across 20 MHz. For example, the first indication information may further include a 4-bit bitmap, 1 bit corresponds to one sub-block, and the bit indicates whether an RU in at least one sub-channel that is allowed to be distributed across the sub-channel and that is included in a sub-block and an RU in another sub-block can be jointly distributed.

Example 4: According to the rule 4, the rule 6, and the rule 7, the AP may indicate whether a sub-channel is allowed to be distributed across a sub-block set, to indirectly indicate the first bandwidth to the STA. For example, the first indication information includes the N-bit bitmap, 1 bit corresponds to one sub-channel, and the bit indicates whether the corresponding sub-channel is allowed to be distributed across the sub-channel. Further, the first indication information may further include a P-bit bitmap, 1 bit in the P-bit bitmap corresponds to one sub-block, and the bit indicates whether each sub-channel included in the corresponding sub-block is allowed to be distributed across the sub-channel. Each sub-channel in a sub-block corresponding to a value 1 of the bit in the P-bit bitmap is allowed to be distributed across the sub-block, and each sub-channel in a sub-block corresponding to a value 0 of the bit in the P-bit bitmap is not allowed to be distributed across the sub-block (this is used as an example in this specification). Alternatively, each sub-channel in a sub-block corresponding to a value 0 of the bit in the P-bit bitmap is allowed to be distributed across the sub-block, and each sub-channel in a sub-block corresponding to a value 1 of the bit in the P-bit bitmap is not allowed to be distributed across the sub-block.

For example, the example in FIG. 11 is still used, and the first indication information may include two bitmaps: a 16-bit bitmap and a 4-bit bitmap. In the 16-bit bitmap, 1 bit corresponds to one 20 MHz sub-channel, and indicates whether the sub-channel is allowed to be distributed across 20 MHz. In the 4-bit bitmap, 1 bit corresponds to one 80 MHz sub-block, and indicates whether all sub-channels included in the sub-block are allowed to be distributed across 80 MHz. If the 16-bit bitmap is "0111 1111 0000 1111" and the 4-bit bitmap is "0101", it indicates that all sub-channels in the sub-block 2 and the sub-block 4 are allowed to be distributed across 80 MHz, and a distributed bandwidth corresponding to each sub-channel in the sub-block 2 and the sub-block 4 may be 160 MHz. Sub-channels in the sub-block 1 and the sub-block 3 are not allowed to be distributed across an 80 MHz set. For example, when the RU allocated by the AP to the STA is located on a sub-channel that belongs to the sub-block 2, the first indication information indicates to the STA that the first bandwidth is 160 MHz. It can be learned according to the rule 4 that a distributed bandwidth corresponding to each of the 2^{nd} sub-channel to the 4^{th} sub-channel in the sub-block 1 may be 60 MHz, and a distributed bandwidth corresponding to each of the four sub-channels in the sub-block 3 is 20 MHz. If the RU allocated by the AP to the STA belongs to the 2^{nd} sub-channel in the sub-block 1, the first indication information indicates to the STA that the first bandwidth is 60 MHz. The example in FIG. 12 is still used, and the first indication information may include two bitmaps: a 24-bit bitmap and a 6-bit bitmap. In the 24-bit bitmap, 1 bit corresponds to one 20 MHz sub-channel, and indicates whether the sub-channel is allowed to be distributed across 20 MHz. In the 6-bit bitmap, 1 bit corresponds to one 80 MHz sub-block, and indicates whether all sub-channels included in the sub-block are allowed to be distributed across 80 MHz. If the 24-bit bitmap is "0111 1111 0000 1111 1011 1111" and the 6-bit bitmap is "010101", it indicates that all sub-channels in the sub-block 2, the sub-block 4, and the sub-block 6 are allowed to be distributed across 80 MHz, and a distributed bandwidth corresponding to each sub-channel in the sub-block 2, the sub-block 4, and the sub-block 6 may be 240 MHz. Sub-channels in the sub-block 1, the sub-block 3, and the sub-block 5 are not allowed to be distributed across an 80 MHz set. Similarly, the STA may determine a location and a size of the first bandwidth based on the allocated RU.

It is specified that if a sub-block includes at least one sub-channel that is allowed to be distributed across the sub-channel, each of the at least one sub-channel is allowed to be distributed across a bandwidth occupied by the sub-block. The example in FIG. 11 is still used, and the first indication information includes a 16-bit bitmap and a 4-bit bitmap. In the 16-bit bitmap, 1 bit corresponds to one 20 MHz sub-channel, and indicates whether the sub-channel is allowed to be distributed across 20 MHz. In the 4-bit bitmap, 1 bit corresponds to one 80 MHz sub-block, and indicates whether the sub-block includes a sub-channel that is allowed to be distributed across 20 MHz. If the 16-bit bitmap is "0111 1111 0000 1111" and the 4-bit bitmap is "1101", it indicates sub-channels in FIG. 11 that are allowed to be distributed across 20 MHz, that is, a distributed bandwidth corresponding to each of 11 sub-channels may be a bandwidth occupied by the 11 sub-channels, namely, 220 MHz. For example, when the RU allocated by the AP to the STA belongs to any one of the 11 sub-channels, the first indication information indicates to the STA that the first bandwidth is 220 MHz.

Example 5: According to the rule 3 and rule 4, the first indication information may include a 2-bit bitmap, and the 2-bit bitmap indicates that a distributed bandwidth is a bandwidth corresponding to a sub-channel, a bandwidth corresponding to a sub-block, or the bandwidth of the PPDU. It may be understood that the sub-channel is a sub-channel, for example, 20 MHz, to which the RU allocated to the STA belongs, and the sub-block is a sub-block, for example, 80 MHz, to which the RU allocated to the STA belongs.

For example, the 2-bit bitmap includes a first bit (b0) and a second bit (b1), where b0 indicates whether all sub-channels included in the bandwidth of the PPDU are allowed to be distributed across the sub-channels, and b1 indicates whether all sub-channels included in the bandwidth of the PPDU are allowed to be distributed across the sub-block. For example, b0 being 1 indicates that all sub-channels included in the bandwidth of the PPDU are allowed to be distributed across the sub-channels, and correspondingly, b0 being 0 indicates that not all sub-channels included in the bandwidth of the PPDU are allowed to be distributed across the sub-channels (this is used as an example in this specification). Alternatively, b0 being 0 indicates that all sub-channels included in the bandwidth of the PPDU are allowed to be distributed across the sub-channels, and correspondingly, b0 being 1 indicates that not all sub-channels included in the bandwidth of the PPDU are allowed to be distributed across the sub-channels. b1 being 1 indicates that all sub-channels included in the bandwidth of the PPDU are allowed to be distributed across the sub-block, and correspondingly, b1 being 0 indicates that not all sub-channels included in the bandwidth of the PPDU are allowed to be distributed across the sub-block (this is used as an example in this specification). Alternatively, b1 being 0 indicates that not all sub-channels included in the bandwidth of the PPDU are allowed to be distributed across the sub-block, and correspondingly, b1 being 1 indicates that all sub-channels included in the bandwidth of the PPDU are allowed to be distributed across the sub-block.

If all sub-channels included in the bandwidth of the PPDU are allowed to be distributed across the sub-channels, and all sub-blocks included in the bandwidth of the PPDU are allowed to be distributed across the sub-blocks, the distributed bandwidth of the STA is the bandwidth of the PPDU. If all sub-channels included in the bandwidth of the PPDU are allowed to be distributed across the sub-channels, and not all sub-blocks included in the bandwidth of the PPDU are allowed to be distributed across the sub-blocks, the distributed bandwidth of the STA is 80 MHz. If not all sub-channels included in the bandwidth of the PPDU are allowed to be distributed across the sub-channels, and not all sub-blocks included in the bandwidth of the PPDU are allowed to be distributed across the sub-blocks, the distributed bandwidth of the STA is 20 MHz. For example, the sub-channel is 20 MHz, and the sub-block is 80 MHz. When the first indication information is "11", it indicates that the first bandwidth is the bandwidth of the PPDU. When the first indication information is "10", it indicates that the first bandwidth is 80 MHz. When the first indication information is "00", it indicates that the first bandwidth is 20 MHz. It may be understood that the first indication information cannot be "01", so that "01" may be reserved.

Optionally, the 2-bit bitmap may be an index, and different indices correspond to different distributed bandwidths. For example, an index corresponding to "00" is 0, and when the index is 0, the distributed bandwidth is 20 MHz. An index corresponding to "10" is 2, and when the index is 2, the distributed bandwidth is 80 MHz. An index corresponding to "11" is 3, and when the index is 3, the distributed bandwidth is the bandwidth of the PPDU.

Example 6: An index may indicate a distributed bandwidth corresponding to each sub-channel in a sub-block. For example, for each of a plurality of sub-blocks, distributed bandwidths respectively corresponding to a plurality of sub-channels included in the sub-block may be pre-defined, and the sub-block is associated with an index. The AP may indicate the sub-block via the index, and further indicate the distributed bandwidths respectively corresponding to the plurality of sub-channels included in the sub-block. In the indication manner 4 shown in FIG. 10A, FIG. 10B, and FIG. 10C, the first indication information may include an index corresponding to each sub-block, to indicate a distributed bandwidth corresponding to each sub-channel in each sub-block.

For example, one sub-block corresponds to a 4-bit index. Table 2 shows a mapping relationship between different indices in one sub-block and distributed bandwidths respectively corresponding to sub-channels in the sub-block. It should be noted that, in Table 2, an example in which one index corresponds to a 4-bit bitmap corresponding to one sub-block is used. A specific implementation form of the index is not limited in embodiments of this application. In Table 2, "1" indicates that a sub-channel is allowed to be distributed across 20 MHz, and "0" indicates that a sub-channel is not allowed to be distributed across 20 MHz.

**Table 2**

| Index | Meaning |
|---|---|
| 0000 | A distributed bandwidth of each 20 MHz sub-channel is 20 MHz |
| 0011 | A distributed bandwidth of first two 20 MHz sub-channels is 20 MHz, and a distributed bandwidth of last two 20 MHz sub-channels is 40 MHz |
| 1100 | A distributed bandwidth of first two 20 MHz sub-channels is 40 MHz, and a distributed bandwidth of last two 20 MHz sub-channels is 20 MHz |
| 0111 | A distributed bandwidth of a 1^{st} 20 MHz sub-channel is 20 MHz, and a distributed bandwidth of last three 20 MHz sub-channels is 60 MHz |
| 1011 | A distributed bandwidth of a 2^{nd} 20 MHz sub-channel is 20 MHz, and a distributed bandwidth of the other three 20 MHz sub-channels is 60 MHz |
| 1101 | A distributed bandwidth of a 3^{rd} 20 MHz sub-channel is 20 MHz, and a distributed bandwidth of the other three 20 MHz sub-channels is 60 MHz |
| 1110 | A distributed bandwidth of a 4^{th} 20 MHz sub-channel is 20 MHz, and a distributed bandwidth of the other three 20 MHz sub-channels is 60 MHz |
| 1111 | A distributed bandwidth of four 20 MHz sub-channels is 80 MHz |
| 0001 | Reserved |
| 0010 | Reserved |
| 0100 | Reserved |
| 0101 | Reserved, or the 2^{nd} 20 MHz sub-channel and the 4^{th} 20 MHz sub-channel form a 40 MHz distributed bandwidth |
| 0110 | Reserved, or the 2^{nd} 20 MHz sub-channel and the 3^{rd} 20 MHz sub-channel form a 40 MHz distributed bandwidth |
| 1000 | Reserved |
| 1001 | Reserved, or the 1^{st} 20 MHz sub-channel and the 4^{th} 20 MHz sub-channel form a 40 MHz distributed bandwidth |
| 1010 | Reserved, or the 1^{st} 20 MHz sub-channel and the 3^{rd} 20 MHz sub-channel form a 40 MHz distributed bandwidth |

The first indication information may include one or more first indices, and one first index corresponds to one sub-block and indicates distributed bandwidth ranges respectively corresponding to sub-channels included in the sub-block. For example, the first indication information includes "1100 1111", the RU allocated to the STA belongs to any sub-channel in a 2^{nd} sub-block, and it can be learned from Table 2 that the first bandwidth of the STA is 80 MHz.

As shown in Table 2, only whether a sub-channel is allowed to be distributed across the sub-channel is considered, and whether the sub-channel is allowed to be distributed across the sub-block is not considered. If sub-channels in a sub-block are allowed to be distributed across the sub-block, the first indication information further indicates distributed bandwidths respectively corresponding to a plurality of sub-blocks included in the bandwidth of the PPDU.

For example, according to the rule 8, a reserved index (entry) in Table 2 may indicate a distributed bandwidth corresponding to an RU in a sub-block. For example, a plurality of sub-blocks with a same index may be distributed across an 80 MHz set. If indices of two sub-blocks are different, neither of the two sub-blocks is allowed to be distributed across 80 MHz. For example, if two sub-blocks correspond to a same index, it indicates that the two sub-blocks may form one group, and a corresponding distributed bandwidth is 160 MHz. If three sub-blocks correspond to a same index, it indicates that the three sub-blocks may form one group, and a corresponding distributed bandwidth is 240 MHz. If four sub-blocks correspond to a same index, it indicates that the four sub-blocks may form one group, and a corresponding distributed bandwidth is 320 MHz. If four sub-blocks separately correspond to different indices, a distributed bandwidth corresponding to each of the four sub-blocks is 80 MHz.

For example, Table 3 shows a mapping relationship between a plurality of indices and a plurality of sub-blocks. It should be noted that, in Table 3, an example in which one index corresponds to a 4-bit bitmap corresponding to one sub-block is used. A specific implementation form of the index is not limited in embodiments of this application. In Table 3, "1" indicates that a sub-channel is allowed to be distributed across 20 MHz, and "0" indicates that a sub-channel is not allowed to be distributed across 20 MHz.

**Table 3**

| | |
|---|---|
| 0000 to 1110 | Same as Table 1 |
| 1111 | A distributed bandwidth of four 20 MHz sub-channels is 80 MHz-group 1 |
| 0001 | A distributed bandwidth of four 20 MHz sub-channels is 80 MHz-group 2 |
| 0010 | A distributed bandwidth of four 20 MHz sub-channels is 80 MHz-group 3 |
| 0100 | A distributed bandwidth of four 20 MHz sub-channels is 80 MHz-group 4 |
| 0101 | Reserved |
| 0110 | Reserved |
| 1000 | Reserved |
| 1001 | Reserved |
| 1010 | Reserved |

It should be noted that an order, a quantity, and values of the indices in Table 2 and Table 3 are not limited in embodiments of this application. For example, Table 2 may have only some indices, or the indices in Table 3 may be merged into Table 2.

The first indication information may include one or more second indices, and one second index corresponds to one sub-block. It may be understood that sub-blocks corresponding to second indices with a same value form a distributed bandwidth, and sub-channels included in sub-blocks corresponding to second indices with different values are allowed to be distributed only in the sub-blocks.

Table 3 is used as an example. For example, FIG. 13 is a diagram of four sub-blocks included in 320 MHz. In correspondence with FIG. 13, the first indication information may be a 16-bit bitmap, and the 16-bit bitmap is "1111 1111 0010 0010". Correspondingly, the first indication information indicates that an index (namely, an index 1) of the sub-block 1 and the sub-block 2 is "1111", and the sub-block 1 and the sub-block 2 may form a distributed bandwidth. In other words, the distributed bandwidth corresponding to the sub-block 1 and the sub-block 2 is 160 MHz. An index (namely, an index 2) of the sub-block 3 and the sub-block 4 is "0010", and the sub-block 3 and the sub-block 4 may form a distributed bandwidth. In other words, the distributed bandwidth corresponding to the sub-block 3 and the sub-block 4 is 160 MHz. For example, when the RU allocated by the AP to the STA belongs to the sub-block 1, the first indication information indicates that the first bandwidth may be 160 MHz.

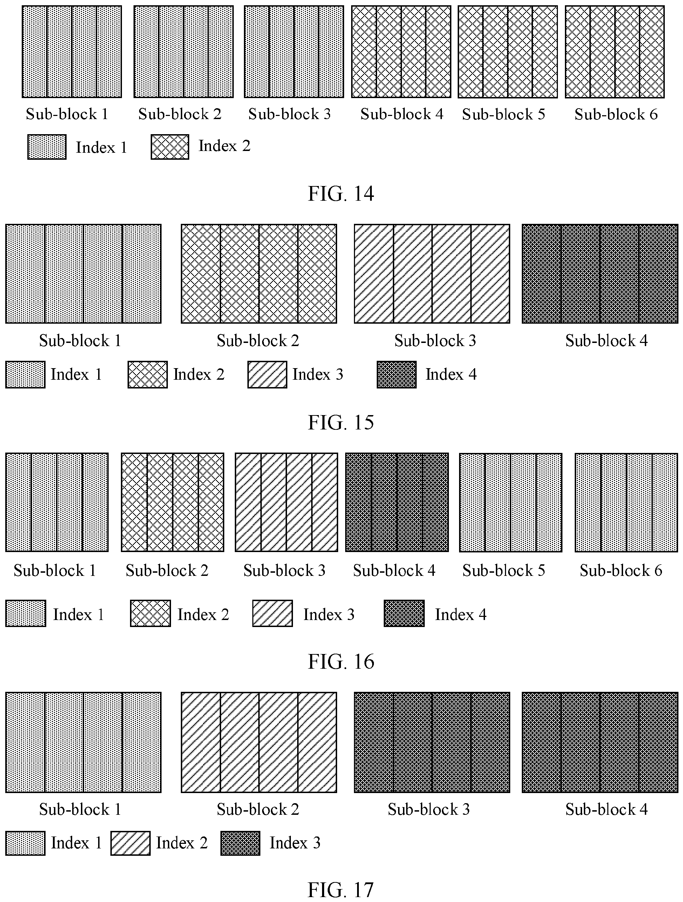

FIG. 14 is a diagram of six sub-blocks included in 480 MHz. In correspondence with FIG. 14, the first indication information may be a 24-bit bitmap, and the 24-bit bitmap is "1111 1111 1111 0010 0010 0010". Correspondingly, the first indication information indicates that an index (namely, an index 1) of the sub-block 1, the sub-block 2, and the sub-block 3 is "1111", and the sub-block 1, the sub-block 2, and the sub-block 3 may form a distributed bandwidth. In other words, the distributed bandwidth corresponding to the sub-block 1, the sub-block 2, and the sub-block 3 is 240 MHz. An index (namely, an index 2) of the sub-block 4, a sub-block 5, and a sub-block 6 is "0010", and the sub-block 4, the sub-block 5, and the sub-block 6 may form a distributed bandwidth. In other words, the distributed bandwidth corresponding to the sub-block 4, the sub-block 5, and the sub-block 6 is 240 MHz. For example, when the RU allocated by the AP to the STA belongs to the sub-block 1, the first indication information indicates that the first bandwidth may be 240 MHz.

For example, FIG. 15 is another diagram of four sub-blocks included in 320 MHz. In correspondence with FIG. 15, the first indication information may be a 16-bit bitmap, and the 16-bit bitmap is "1111 0001 0010 0100". In other words, the index (namely, the index 1) of the sub-block 1 is "1111", the index (namely, the index 2) of the sub-block 2 is "0001", the index (namely, an index 3) of the sub-block 3 is "0010", and the index (namely, an index 4) of the sub-block 4 is "0100". Correspondingly, the first indication information indicates that a distributed bandwidth corresponding to each sub-channel in the four sub-blocks is 80 MHz, that is, each sub-block is not allowed to be distributed across 80 MHz. For example, when the RU allocated by the AP to the STA belongs to the sub-block 4, the first indication information indicates that the first bandwidth may be 80 MHz.

FIG. 16 is another diagram of six sub-blocks included in 480 MHz. In correspondence with FIG. 16, the first indication information may be a 24-bit bitmap, and the 24-bit bitmap is "1111 0001 0010 0100 1111 1111". In other words, the index (namely, the index 1) of the sub-block 1 is "1111", the index (namely, the index 2) of the sub-block 2 is "0001", the index (namely, the index 3) of the sub-block 3 is "0010", the index (namely, the index 4) of the sub-block 4 is "0100", the index (namely, the index 1) of the sub-block 5 is "1111", and the index (namely, the index 1) of the sub-block 6 is "1111". Correspondingly, the first indication information indicates that a distributed bandwidth corresponding to each sub-channel in the sub-block 1, the sub-block 2, the sub-block 3, and the sub-block 4 is 80 MHz, and a distributed bandwidth corresponding to each sub-channel in the sub-block 5 and the sub-block 6 is 160 MHz. For example, when the RU allocated by the AP to the STA belongs to the sub-block 4, the first indication information indicates that the first bandwidth may be 80 MHz. When the RU allocated by the AP to the STA belongs to the sub-block 5, the first indication information indicates that the first bandwidth may be 160 MHz.

For example, FIG. 17 is still another diagram of four sub-blocks included in 320 MHz. In correspondence with FIG. 17, the first indication information may be a 16-bit bitmap, and the 16-bit bitmap is "1111 0001 0010 0010". In other words, the index (namely, the index 1) of the sub-block 1 is "1111", the index (namely, the index 2) of the sub-block 2 is "0001", the index (namely, an index 3) of the sub-block 3 is "0010", and the index (namely, an index 3) of the sub-block 4 is "0010". Correspondingly, the first indication information indicates that a distributed bandwidth corresponding to the sub-block 1 and the sub-block 2 is 80 MHz, that is, each sub-block is not allowed to be distributed across 80 MHz. The sub-block 3 and the sub-block 4 may form a distributed bandwidth. In other words, the distributed bandwidth corresponding to the sub-block 3 and the sub-block 4 is 160 MHz. For example, when the RU allocated by the AP to the STA belongs to the sub-block 4, the first indication information indicates that the first bandwidth may be 160 MHz.

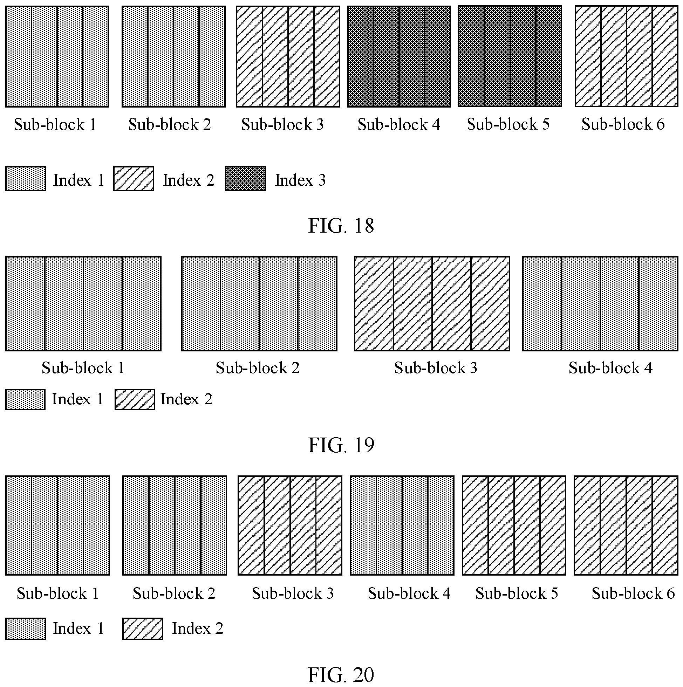

FIG. 18 is still another diagram of six sub-blocks included in 480 MHz. In correspondence with FIG. 18, the first indication information may be a 24-bit bitmap, and the 24-bit bitmap is "1111 1111 0001 0010 0010 0001". In other words, the index (namely, the index 1) of the sub-block 1 and the sub-block 2 is "1111", the index (namely, the index 2) of the sub-block 3 and the sub-block 6 is "0001", and the index (namely, the index 3) of the sub-block 4 and the sub-block 5 is "0010". Correspondingly, the first indication information indicates that the sub-block 1 and the sub-block 2 may form a distributed bandwidth. In other words, the distributed bandwidth corresponding to each sub-channel in the sub-block 1 and the sub-block 2 is 160 MHz. The sub-block 3 and the sub-block 6 may form a distributed bandwidth. In other words, the distributed bandwidth corresponding to the sub-block 3 and the sub-block 6 is 160 MHz. The sub-block 4 and the sub-block 5 may form a distributed bandwidth. In other words, the distributed bandwidth corresponding to each sub-channel in the sub-block 4 and the sub-block 5 is 160 MHz. When the RU allocated by the AP to the STA belongs to the sub-block 4, the first indication information indicates that the first bandwidth may be 160 MHz.

For example, FIG. 19 is yet another diagram of four sub-blocks included in 320 MHz. In correspondence with FIG. 19, the first indication information may be a 16-bit bitmap, and the 16-bit bitmap is "1111 1111 0000 1111". In other words, the index (namely, the index 1) of the sub-block 1 is "1111", the index (namely, the index 1) of the sub-block 2 is "1111", the index (namely, the index 3) of the sub-block 3 is "0000", and the index (namely, the index 1) of the sub-block 4 is "1111". Correspondingly, the first indication information indicates that the distributed bandwidth corresponding to the sub-block 3 is 80 MHz, that is, the sub-block is not allowed to be distributed across 80 MHz. A distributed bandwidth corresponding to each sub-channel in the sub-block 1, the sub-block 2, and the sub-block 4 is 240 MHz. For example, when the RU allocated by the AP to the STA belongs to any sub-channel in the sub-block 2, the first indication information indicates that the first bandwidth may be 240 MHz.

FIG. 20 is yet another diagram of six sub-blocks included in 480 MHz. In correspondence with FIG. 20, the first indication information may be a 24-bit bitmap, and the 24-bit bitmap is "1111 1111 0000 1111 0000 0000". In other words, the index (namely, the index 1) of the sub-block 1, the sub-block 2, and the sub-block 4 is "1111", and the index (namely, the index 3) of the sub-block 3, the sub-block 5, and the sub-block 6 is "0000". Correspondingly, the first indication information indicates that the sub-block 1, the sub-block 2, and the sub-block 4 may form a distributed bandwidth, and a distributed bandwidth corresponding to each sub-channel in the sub-block 1, the sub-block 2, and the sub-block 4 is 240 MHz; and the sub-block 3, the sub-block 5, and the sub-block 6 may form a distributed bandwidth, and a distributed bandwidth corresponding to each sub-channel in the sub-block 3, the sub-block 5, and the sub-block 6 is 240 MHz. For example, when the RU allocated by the AP to the STA belongs to any sub-channel in the sub-block 2, the first indication information indicates that the first bandwidth may be 240 MHz.

In the foregoing embodiments, it is considered that the bandwidth of the bandwidth-limited STA and the bandwidth of the PPDU are punctured. The AP may indicate the first bandwidth and the first distributed RU to the STA. This can ensure that the first distributed RU is in the maximum bandwidth range supported by the STA, and ensure that the first distributed RU is in a bandwidth range outside the punctured bandwidth, to increase the transmit power of the STA.

In an alternative solution, remaining available subcarriers in the bandwidth of the PPDU other than subcarriers occupied by an RU allocated to the bandwidth-limited STA may be used as distributed resources and allocated to a full-bandwidth STA in a unified manner. In other words, the subcarriers of the distributed RU allocated to the full-bandwidth STA belong to subcarriers other than the subcarriers included in the distributed RU allocated to the bandwidth-limited STA. Therefore, even if a contiguous RU indicated to the full-bandwidth STA is located in a distributed bandwidth of the bandwidth-limited STA, when mapping the contiguous RU to the distributed RU, the full-bandwidth STA can still map the contiguous RU outside the distributed bandwidth of the bandwidth-limited STA, to maximize a transmit power of the full-bandwidth STA.

Specifically, the AP generates the trigger frame and sends the trigger frame. The trigger frame includes third indication information, and the third indication information may indicate K RUs that have been allocated, to indicate RUs allocated to one or more bandwidth-limited STAs. It may be understood that, for any one of the K RUs (for example, which is referred to as a first RU), the first RU is mapped to a first distributed RU, and a bandwidth of at least one sub-channel occupied by subcarriers included in the first distributed RU is less than a bandwidth of a PPDU scheduled by the AP. The bandwidth of the at least one sub-channel occupied by the subcarriers included in the first distributed RU to which the first RU is mapped is referred to as a distributed bandwidth corresponding to the first RU. A distributed bandwidth corresponding to a STA is a distributed bandwidth corresponding to an RU allocated to the STA. For example, the first RU is allocated to a first bandwidth-limited STA, and a distributed bandwidth (which is referred to as a first bandwidth in this application) corresponding to the first bandwidth-limited STA is the distributed bandwidth corresponding to the first RU.

In embodiments of this application, the AP may indicate the first bandwidth of the full-bandwidth STA to the full-bandwidth STA via the third indication information.

For example, it may be specified that the first bandwidth corresponding to the bandwidth-limited STA is a bandwidth that can be discretized to a smallest first bandwidth in first bandwidths of RUs allocated to the bandwidth-limited STA. For example, values (sizes) of the first bandwidths supported by the system are 20 MHz, 80 MHz, and 160 MHz. In this case, a first bandwidth corresponding to a 26-tone RU may be 20 MHz, a first bandwidth separately corresponding to a 242-tone RU, a 484-tone RU, or a 484+242-tone MRU may be 80 MHz, and a first bandwidth corresponding to a 996-tone RU or a 996+484-tone MRU is 160 MHz. It is clear that if the system supports the first bandwidth of 40 MHz, the first bandwidth corresponding to the 242-tone RU may also be 40 MHz.

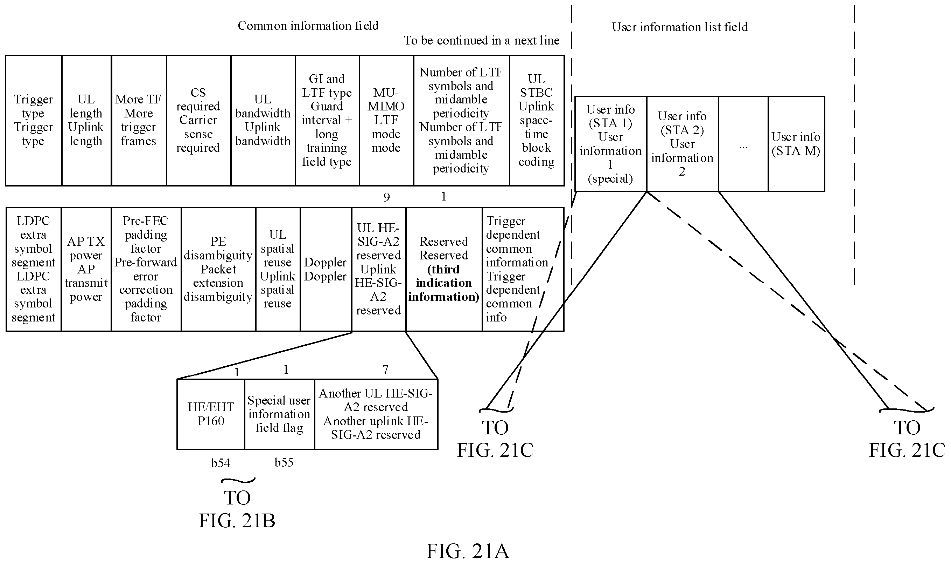

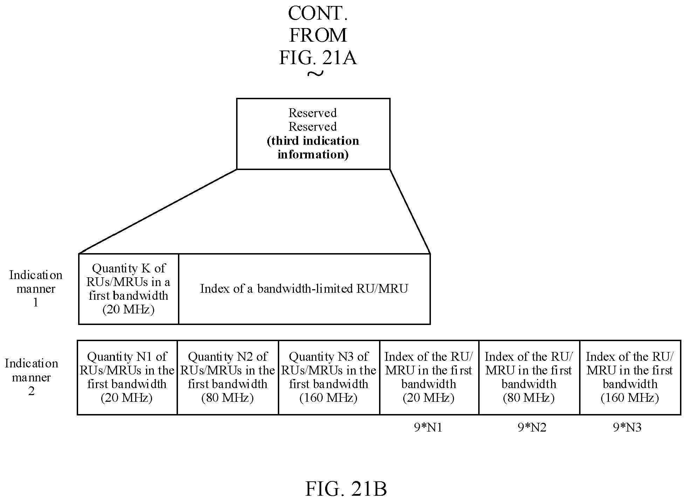

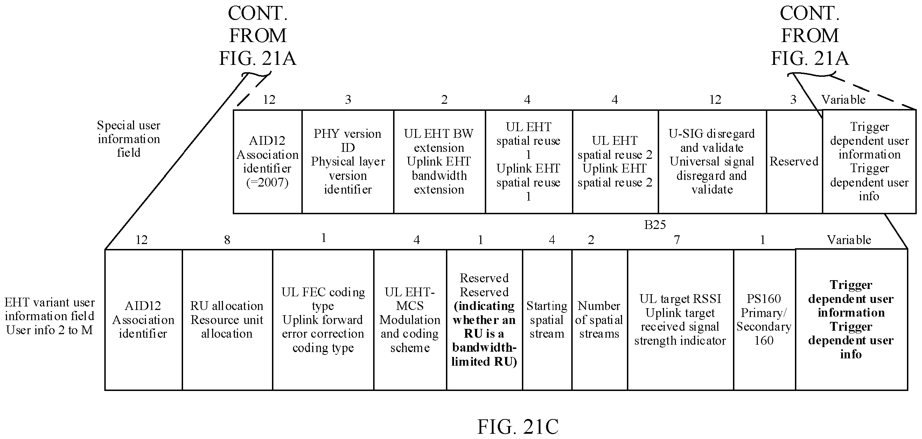

In this case, the AP may indicate the first bandwidth of the full-bandwidth STA via a resource unit allocation index. It may be understood that one RU allocation index (9-bit index) may indicate a size and a location of one RU. For example, the third indication information may be K RU allocation indices, and the first bandwidth of the bandwidth-limited STA can be discretized to a smallest first bandwidth in first bandwidths of the K RUs. For example, FIG. 21A, FIG. 21B, and FIG. 21C are a diagram of a structure of a trigger frame. In FIG. 21A, FIG. 21B, and FIG. 21C, an example in which the third indication information is carried in a reserved bit in a common information field is used. In an indication manner 1 in FIG. 21A, FIG. 21B, and FIG. 21C, an example in which the first indication information includes the K RU allocation indices is used. It is assumed that the plurality of first bandwidths corresponding to the K RUs include 20 MHz and 80 MHz. The first bandwidth of the bandwidth-limited STA is 20 MHz (this is used as an example in FIG. 21A, FIG. 21B, and FIG. 21C). It should be noted that the first bandwidth corresponding to each of the K RUs may be considered by default as a first bandwidth in which each RU is located. It may be understood that a same resource allocation index corresponds to a same STA. Therefore, each STA may determine an allocated RU and a corresponding first bandwidth.

For another example, a plurality of first bandwidths, for example, R types of first bandwidths, may be pre-defined, and the R types of first bandwidths may be sorted based on sizes of bandwidths. In this case, the AP may indicate a quantity of R types of first bandwidths, and indicate the K RU allocation indices based on an order of the R types of first bandwidths. Still refer to FIG. 21A, FIG. 21B, and FIG. 21C. For example, in an indication manner 2 in FIG. 21A, FIG. 21B, and FIG. 21C, an example in which the third indication information includes the K RU allocation indices is used. In addition, in FIG. 21A, FIG. 21B, and FIG. 21C, an example in which the R types of first bandwidths include a 20 MHz bandwidth, an 80 MHz bandwidth, and a 160 MHz bandwidth is used. As shown in FIG. 21A, FIG. 21B, and FIG. 21C, the R types of first bandwidths are sorted in ascending order of bandwidths. It is assumed that in the K RUs, a first bandwidth corresponding to N1 RUs is 20 MHz, a first bandwidth corresponding to N2 RUs is 80 MHz, and a first bandwidth corresponding to N3 RUs is 160 MHz. The third indication information may include N1 RU allocation indices corresponding to 20 MHz, N1 RU allocation indices corresponding to 80 MHz, and N1 RU allocation indices corresponding to 160 MHz. The STA may determine, based on an allocation index of an allocated RU, the first bandwidth corresponding to the STA.

Alternatively, the third indication information may indicate to carry an order index of a user information field of an RU of a corresponding bandwidth-limited STA. The order index corresponds to an order of the R types of first bandwidths, and may indicate the first bandwidths respectively corresponding to the K RUs. For example, when a 3^{rd} user information field, a 5^{th} user information field, and a 7^{th} user information field are user information fields that carry corresponding bandwidth-limited STAs, the third indication information may indicate 3, 5, and 7. It is clear that the common information field may alternatively indicate a quantity of user information fields that carry corresponding bandwidth-limited STAs.

Optionally, the third indication information may further indicate whether a first bandwidth corresponding to each user information field is a distributed bandwidth of the bandwidth-limited STA. For example, for each user information field, 1 bit may indicate whether the user information field is the user information field of the bandwidth-limited STA, so that the common information field does not need to indicate whether the STA is a bandwidth-limited STA. Still refer to FIG. 21A, FIG. 21B, and FIG. 21C. For example, in FIG. 21A, FIG. 21B, and FIG. 21C, an example in which the third indication information is further carried in a B25 field is used. The B25 field indicates whether the user information field is a user information field of the bandwidth-limited STA. It may also be understood as that the B25 field may indicate whether the RU is a bandwidth-limited RU.

In embodiments of this application, the remaining available subcarriers in the bandwidth of the PPDU other than the subcarriers occupied by the RU allocated to the bandwidth-limited STA are used as distributed resources and allocated to the full-bandwidth STA in a unified manner, so that the full-bandwidth STA maps the allocated contiguous RU outside the distributed bandwidth of the bandwidth-limited STA. Therefore, this can maximize a transmit function of the full-bandwidth STA.

In the foregoing embodiments of this application, the method provided in embodiments of this application is described separately from perspectives of an AP, a STA, and interaction between an AP and a STA. To implement the functions in the method provided in embodiments of this application, the AP and the STA may include a hardware structure and/or a software module, to implement the foregoing functions by using the hardware structure, the software module, or a combination of the hardware structure and the software module. Whether a function in the foregoing functions is performed in a form of the hardware structure, the software module, or both the hardware structure and the software module depends on a specific application and a design constraint condition of the technical solutions.

The following describes, with reference to the accompanying drawings, communication apparatuses, in embodiments of this application, configured to implement the foregoing method. Therefore, all the foregoing content may be used in the following embodiments. Repeated content is not described again.

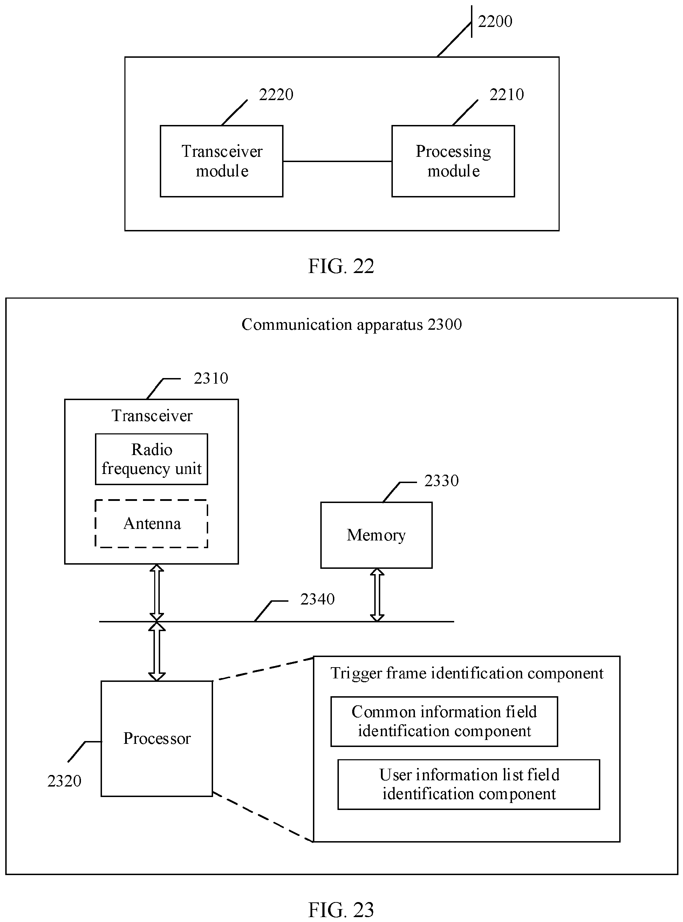

FIG. 22 is a block diagram of a communication apparatus 2200 according to an embodiment of this application. The communication apparatus 2200 may correspondingly implement functions or steps of the STA or the AP in the method embodiments. The communication apparatus may include a processing module 2210 and a transceiver module 2220. Optionally, the communication apparatus may further include a storage unit. The storage unit may be configured to store instructions (code or a program) and/or data. The processing module 2210 and the transceiver module 2220 may be coupled to the storage unit. For example, the processing module 2210 may read the instructions (the code or the program) and/or the data in the storage unit, to implement a corresponding method. The foregoing units may be disposed independently, or may be partially or completely integrated.

For example, the communication apparatus 2200 can correspondingly implement behavior and functions of the AP in the foregoing method embodiments. For example, the communication apparatus 2200 may be an AP, or may be a component (for example, a chip or a circuit) used in the AP. The transceiver module 2220 may be configured to perform all receiving or sending operations performed by the AP in embodiments of this application, for example, S701 and S702 in the embodiment shown in FIG. 7, and/or configured to support another process of the technology described in this specification. The processing module 2210 is configured to perform all operations performed by the AP other than sending and receiving operations in the embodiment shown in FIG. 7, for example, generating a trigger frame, and/or support another process of the technology described in this specification.

In a possible implementation, the processing module 2210 is configured to generate a trigger frame. The trigger frame includes resource allocation information and first indication information. The first indication information indicates a first bandwidth to the STA, and the resource allocation information indicates a first distributed RU that is allocated to the STA and that corresponds to the first bandwidth. The first distributed RU includes a plurality of non-contiguous subcarriers in frequency domain, and the first bandwidth is a bandwidth of at least one sub-channel occupied by the subcarriers included in the first distributed RU.

For another example, the communication apparatus 2200 can correspondingly implement behavior and functions of the STA in the foregoing method embodiments. For example, the communication apparatus 2200 may be a STA, or may be a component (for example, a chip or a circuit) used in the STA. The transceiver module 2220 may be configured to perform all receiving or sending operations performed by the STA in embodiments of this application, for example, S701 and S702 in the embodiment shown in FIG. 7, and/or configured to support another process of the technology described in this specification. The processing module 2210 is configured to perform all operations performed by the STA other than sending and receiving operations in the embodiment shown in FIG. 7, for example, generating a trigger frame, and/or support another process of the technology described in this specification.

In a possible implementation, the transceiver module 2220 is configured to receive a trigger frame sent by an AP. The trigger frame includes resource allocation information and first indication information. The first indication information indicates a first bandwidth to the STA, and the resource allocation information indicates a first distributed RU that is allocated to the STA and that corresponds to the first bandwidth. The first distributed RU includes a plurality of non-contiguous subcarriers in frequency domain, and the first bandwidth is a bandwidth of at least one sub-channel occupied by the subcarriers included in the first distributed RU. The transceiver module 2220 is further configured to send a TB PPDU on the first distributed RU based on triggering of the trigger frame.

In an optional implementation, the trigger frame further includes second indication information, and the second indication information indicates whether an RU allocated to the STA is a distributed RU or a contiguous RU.

In an optional implementation, the first bandwidth is less than or equal to any one of the following bandwidths: a maximum bandwidth supportable by the STA, a maximum distributed bandwidth supported by a system, or a bandwidth of a PPDU scheduled by the AP.

In an optional implementation, the first distributed RU is obtained by mapping a first contiguous RU to the first bandwidth, and the first bandwidth is a bandwidth of at least one sub-channel occupied by subcarriers included in a second contiguous RU that is in the first bandwidth and that is allocated to another STA.

In an optional implementation, a bandwidth of at least one sub-channel occupied by subcarriers included in a third contiguous RU that is located outside the first bandwidth and that is allocated to another STA does not overlap the first bandwidth.

In an optional implementation, the first indication information is located in a common field or a user information list field, and indicates the first bandwidth.

In an optional implementation, the first indication information includes an N-bit bitmap, N is a quantity of sub-channels included in a bandwidth of the PPDU, 1 bit in the N-bit bitmap corresponds to one sub-channel, and the bit in the N-bit bitmap indicates whether the corresponding sub-channel is allowed to be distributed across the sub-channel.

In an optional implementation, the first indication information includes a P-bit bitmap, 1 bit in the P-bit bitmap corresponds to one sub-block, the bit indicates whether each sub-channel included in the corresponding sub-block is allowed to be distributed across the sub-channel, and P is an integer greater than or equal to 1. Each sub-channel in a sub-block is allowed to be distributed across a bandwidth occupied by the sub-block only when each sub-channel in the sub-block is allowed to be distributed across the sub-channel; or each of at least one sub-channel is allowed to be distributed across a bandwidth occupied by a sub-block only when the sub-block includes the at least one sub-channel that is allowed to be distributed across the sub-channel.

In an optional implementation, the first indication information includes an M-bit bitmap, and 1 bit in the M-bit bitmap corresponds to one sub-block. The bit in the M-bit bitmap indicates that each sub-channel in the corresponding sub-block is allowed to be distributed across the sub-channel, and M is an integer greater than or equal to 1.

In an optional implementation, the first indication information further indicates whether two or more sub-blocks are allowed to form a distributed bandwidth. One of the two or more sub-blocks includes a sub-channel that is allowed to be distributed across the sub-channel.

In an optional implementation, the first indication information further includes an S-bit bitmap, 1 bit in the S-bit bitmap corresponds to one sub-channel, and the bit in the S-bit bitmap indicates whether the corresponding sub-block is allowed to be distributed across the sub-block.

In an optional implementation, the first indication information includes one or more first indices, and one first index corresponds to one sub-block and indicates distributed bandwidth ranges respectively corresponding to a plurality of sub-channels included in the sub-block.

In an optional implementation, sub-channels in a sub-block are allowed to be distributed across the sub-block, and the first indication information further indicates distributed bandwidth ranges respectively corresponding to a plurality of sub-blocks included in a bandwidth of the PPDU.

In an optional implementation, the first indication information includes one or more second indices, one second index corresponds to one sub-block, sub-blocks corresponding to second indices with a same value form a distributed bandwidth, and sub-channels included in sub-blocks corresponding to second indices with different values are allowed to be distributed only in the sub-blocks.

In an optional implementation, the first indication information includes a 2-bit bitmap, and the 2-bit bitmap indicates that the first bandwidth is 20 MHz, 80 MHz, or a bandwidth of the PPDU.

For another example, the communication apparatus 2200 can correspondingly implement behavior and functions of the AP in the foregoing method embodiments. In a possible implementation, the processing module 2210 is configured to generate a trigger frame. The trigger frame includes third indication information, the third indication information indicates K RUs, a first RU in the K RUs is mapped to a first distributed RU, and a bandwidth of at least one sub-channel occupied by subcarriers included in the first distributed RU is a first bandwidth. Subcarriers corresponding to a second RU other than the K RUs in a bandwidth of the PPDU belong to subcarriers other than subcarriers included in the K RUs in the bandwidth of the PPDU, and K is an integer greater than or equal to 1. The transceiver module 2220 is configured to send the trigger frame to the STA.

For another example, the communication apparatus 2200 can correspondingly implement behavior and functions of the STA in the foregoing method embodiments. In a possible implementation, the transceiver module 2220 is configured to receive a trigger frame sent by an AP. The trigger frame includes third indication information, the third indication information indicates K RUs, a first RU in the K RUs is mapped to a first distributed RU, and a bandwidth of at least one sub-channel occupied by subcarriers included in the first distributed RU is a first bandwidth. Subcarriers corresponding to a second RU other than the K RUs in a bandwidth of the PPDU belong to subcarriers other than subcarriers included in the K RUs in the bandwidth of the PPDU, and K is an integer greater than or equal to 1. The processing module 2210 is configured to determine a trigger frame, and the transceiver module 2220 is further configured to send a TB PPDU to an AP based on triggering of the trigger frame.

In an optional implementation, the first bandwidth corresponding to the first RU is a bandwidth that can be discretized to a smallest first bandwidth in first bandwidths of RUs allocated to the bandwidth-limited station.

In an optional implementation, the third indication information includes K RU allocation indices, an allocation index of the first RU in the K RU allocation indices corresponds to one of R types of first bandwidths, and one type of first bandwidth may correspond to a plurality of RU allocation indices. Alternatively, the third indication information indicates user information field indices separately corresponding to the K RUs, and R is an integer greater than or equal to 1.

In an optional implementation, the third indication information further indicates whether a first bandwidth corresponding to each user information field is a distributed bandwidth of the bandwidth-limited STA.

It should be understood that the processing module 2210 in this embodiment of this application may be implemented by a processor or a processor-related circuit component, and the transceiver module 2220 may be implemented by a transceiver, a transceiver-related circuit component, or a communication interface.

FIG. 23 shows a communication apparatus 2300 according to an embodiment of this application. The communication apparatus 2300 may be an AP, and can implement a function of the AP in the method provided in embodiments of this application. Alternatively, the communication apparatus 2300 may be a STA, and can implement a function of the STA in the method provided in embodiments of this application. Alternatively, the communication apparatus 2300 may be an apparatus that can support an AP in implementing a corresponding function in the method provided in embodiments of this application, or can be an apparatus that can support a STA in implementing a corresponding function in the method provided in embodiments of this application. The communication apparatus 2300 may be a chip or a chip system. In embodiments of this application, the chip system may include a chip, or may include a chip and another distributed component. In hardware implementation, the transceiver module 2220 may be a transceiver 2310. The communication apparatus 2300 includes at least one processor 2320, configured to implement or support the communication apparatus 2300 in implementing the functions of the STA or the AP in the method provided in embodiments of this application. The processor 2320 is mainly configured to process a communication protocol and communication data, control the communication apparatus, execute a software program, and process data of the software program. For example, the processor 2320 generates the trigger frame. The processor 2320 may include a trigger frame identification component, and the trigger frame identification component may further include a common information field identification component, a user information list field identification component, and the like. When the trigger frame includes the common information field and/or the user information list field, the communication apparatus 2300 indicates the first bandwidth via the common information field, and the communication apparatus 2300 indicates, via the common information field and/or the user information list field, the first distributed RU corresponding to the first bandwidth. Specifically, the trigger frame identification component may be configured to use the communication method provided in embodiments of this application.

The communication apparatus 2300 may further include at least one memory 2330, configured to store program instructions and/or data. The memory 2330 is coupled to the processor 2320. Coupling in embodiments of this application is indirect coupling or a communication connection between apparatuses, units, or modules, and may be in an electrical, mechanical, or another form, and is used for information exchange between the apparatuses, units, or modules. The processor 2320 may cooperate with the memory 2330. The processor 2320 may execute the program instructions and/or the data stored in the memory 2330, so that the communication apparatus 2300 implements the corresponding method. At least one of the at least one memory may be located in the processor.

The communication apparatus 2300 may further include the transceiver 2310, configured to communicate with another device through a transmission medium, so that an apparatus used in the communication apparatus 2300 can communicate with the another device. For example, when the communication apparatus is an AP, the another device is a STA; or when the communication apparatus is a STA, the another device is an AP. The processor 2320 may send or receive data through the transceiver 2310. The transceiver 2310 may be specifically a transceiver, and may include a radio frequency circuit and an antenna. The radio frequency circuit is mainly configured to: perform conversion between a baseband signal and a radio frequency signal, and process the radio frequency signal. The antenna is mainly configured to receive or send a radio frequency signal in a form of an electromagnetic wave. The input/output apparatus, for example, a touchscreen, a display, or a keyboard, is mainly configured to: receive data input by a user and output data to the user. The radio frequency unit may be independent of the communication apparatus 2300, or may be integrated into the communication apparatus 2300. The antenna may be a remote antenna independent of the communication apparatus 2300, or may be an antenna integrated into the communication apparatus 2300.

The communication apparatus 2300 may be an independent device or may be a part of a large device. For example, the communication apparatus 2300 may be an independent integrated circuit IC, a chip, a chip system, or a subsystem; a set including one or more ICs, where optionally, the set of ICs may also include a storage component configured to store data and instructions; an ASIC, for example, a modem (Modem); a module that can be embedded in another device; and a receiver, an intelligent terminal, a wireless device, a handheld device, a mobile unit, a vehicle-mounted device, a cloud device, an artificial intelligence device, or the like.

A specific connection medium between a transceiver 2310, the processor 2320, and the memory 2330 is not limited in this embodiment of this application. In this embodiment of this application, the memory 2330, the processor 2320, and the transceiver 2310 are connected through a bus 2340 in FIG. 23, and the bus is represented by a thick line in FIG. 23. A connection manner between other components is schematically described, and is not limited thereto. The bus may be classified into an address bus, a data bus, a control bus, or the like. For ease of representation, the bus is represented by only one bold line in FIG. 23. However, it does not indicate that there is only one bus or only one type of bus.

In embodiments of this application, the processor 2320 may be a general-purpose processor, a digital signal processor, an application-specific integrated circuit, a field programmable gate array or another programmable logic device, a distributed gate or transistor logic device, or a distributed hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory 2330 may be a non-volatile memory like a hard disk drive (hard disk drive, HDD) or a solid-state drive (solid-state drive, SSD), or may be a volatile memory (volatile memory) like a random access memory (random access memory, RAM). The memory is any other medium that can be used to carry or store expected program code in a form of an instruction or a data structure and that can be accessed by a computer. However, this is not limited thereto. The memory in embodiments of this application may alternatively be a circuit or any other apparatus that can implement a storage function, and is configured to store the program instructions and/or the data.

It should be noted that the communication apparatus in the foregoing embodiments may be a terminal, a circuit, a chip used in the terminal, or another combined device, component, or the like that has a function of the terminal. When the communication apparatus is a terminal, the transceiver module may be a transceiver, and may include an antenna, a radio frequency circuit, and the like. The processing module may be a processor, for example, a central processing unit (central processing unit, CPU). When the communication apparatus is a component that has a function of the terminal, the transceiver module may be a radio frequency unit, and the processing module may be a processor. When the communication apparatus is a chip or a chip system, the transceiver module may be an input/output interface of the chip or the chip system, and the processing module may be a processor of the chip or the chip system.

As a possible product form, the AP or the STA described in embodiments of this application may further be implemented by using the following components: one or more FPGAs (field programmable gate arrays), a PLD (programmable logic device), a controller, a state machine, gate logic, a distributed hardware component, any other suitable circuit, or any combination of circuits that can perform various functions described in this application.

It should be understood that the APs in various product forms have any function of the AP in the foregoing method embodiments. Details are not described herein again. The STAs in various forms have any function of the STA in the foregoing method embodiments. Details are not described herein again.

An embodiment of this application further provides a communication system. Specifically, the communication system includes a STA and an AP, or may further include more APs and more STAs. For example, the AP is configured to implement functions of the related AP in embodiments of this application, and the STA is configured to implement functions of the related STA in embodiments of this application. For example, the STA may perform S701 and S702 in the embodiment shown in FIG. 7. The AP may perform S701 and S702 in the embodiment shown in FIG. 7.

An embodiment of this application further provides a computer-readable storage medium, including instructions. When the instructions are run on a computer, the computer is enabled to perform the method performed by the AP or the STA in embodiments of this application.

An embodiment of this application further provides a computer program product, including computer program code. When the computer program code is run on a computer, the computer is enabled to perform the method performed by the AP or the STA in embodiments of this application.

An embodiment of this application provides a chip system. The chip system includes a processor and may further include a memory, and is configured to implement a function of the AP or the STA in the foregoing methods. The chip system may include a chip, or may include a chip and another distributed component. The processor may be configured to perform, for example but not limited to, baseband related processing; and the transceiver may be configured to perform, for example but not limited to, radio frequency sending or receiving. The foregoing components may be separately disposed on chips independent of each other, or at least some or all of the components may be disposed on a same chip. For example, the processor may be classified into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system on chip (system on chip). Whether components are independently disposed on different chips or are integrated and disposed on one or more chips depends on specific requirements of a product design. Specific implementation forms of the foregoing components are not limited in embodiments of the present invention.

An embodiment of this application further provides a communication apparatus, including a processor and an interface. The processor is configured to perform the data processing method in any one of the foregoing method embodiments. It should be understood that the communication apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

An embodiment of this application further provides a communication system, including at least one AP and at least one STA. Any AP is configured to implement a function implemented by the AP in any one of the foregoing method embodiments, and any STA is configured to implement a function implemented by the first STA in any one of the foregoing method embodiments.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In addition, in embodiments of this application, unless otherwise specified, a quantity of nouns represents "a singular noun or plural nouns", that is, "one or more". "At least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. For example, A/B indicates A or B. At least one of the following items (pieces) or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numerals such as "first" and "second" in embodiments of this application are used to distinguish between a plurality of objects, and are not intended to limit sizes, content, a sequence, a time sequence, application scenarios, priorities, or importance of the plurality of objects. For example, a first contiguous RU and a second contiguous RU may be a same RU, or may be different RUs. In addition, the names do not indicate that priorities, application scenarios, importance degrees, or the like of the two RUs are different. In this specification, "an embodiment of this application" means that particular features, structures, or characteristics related to the embodiment are included in at least one embodiment of the present invention. Therefore, "embodiments of this application" appearing throughout this specification do not necessarily mean a same embodiment. In addition, these particular features, structures, or characteristics may be combined in one or more embodiments in any proper manner.

The term "for example" in embodiments of this application is used to represent giving an example or descriptions. Any embodiment or implementation solution described as an "example" in embodiments of this application should not be explained as being more preferred than another embodiment or implementation solution. In other words, using the word "example" is intended to describe a concept in a specific manner.

All or some of the foregoing methods in the embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

### Appendix 1: Data and pilot subcarrier indices for RUs in an 80 MHz EHT PPDU

Data and pilot subcarrier indices for RUs in an 80 MHz EHT PPDU

| RU type | RU index and subcarrier range (RU index and subcarrier range) | | | | |
|---|---|---|---|---|---|
| 26-tone RU | RU 1 | RU 2 | RU 3 | RU 4 | RU 5 |
| | [-499: -474] | [-473: -448] | [-445: -420] | [-419: -394] | [-392: -367] |
| | {-494, -480} | {-468, -454} | {-440, -426} | {-414, -400} | {-386, -372} |
| | RU 6 | RU 7 | RU 8 | RU 9 | |
| | [-365: -340] | [-339: -314] | [-311: -286] | [-285: -260] | |
| | {-360, -346} | {-334,-320} | {-306,-292} | {-280, -266} | |
| | RU 10 | RU 11 | RU 12 | RU 13 | RU 14 |
| | [-252: -227] | [-226: -201] | [-198: -173] | [-172: -147] | [-145: -120] |
| | {-246, -232} | {-220, -206} | {-192, -178} | {-166, -152} | {-140, -126} |
| | RU 15 | RU 16 | RU 17 | RU 18 | |
| | [-118: -93] | [-92: -67] | [-64: -39] | [-38: -13] | |
| | {-112, -98} | {-86, -72} | {-58, -44} | {-32, -18} | |
| | RU 19 | RU 20 | RU 21 | RU 22 | RU 23 |
| | [13: 38] | [39: 64] | [67: 92] | [93: 118] | [120: 145] |
| | {18, 32} | {44, 58} | {72, 86} | {98, 112} | {126, 140} |
| | RU 24 | RU 25 | RU 26 | RU 27 | |
| | [147: 172] | [173: 198] | [201: 226] | [227: 252] | |
| | {152, 166} | {178, 192} | {206, 220} | {232, 246} | |
| | RU 28 | RU 29 | RU 30 | RU 31 | RU 32 |
| | [260: 285] | [286: 311] | [314: 339] | [340: 365] | [367: 392] |
| | {266, 280} | {292, 306} | {320, 334} | {346, 360} | {372, 386} |
| | RU 33 | RU 34 | RU 35 | RU 36 | |
| | [394: 419] | [420: 445] | [448: 473] | [474: 499] | |
| | {400, 414} | {426, 440} | {454, 468} | {480, 494} | |
| 52-tone RU | RU 1 | RU 2 | RU 3 | RU 4 | |
| | [-499: -448] | [-445: -394] | [-365: -314] | [-311: -260] | |
| | {-494, -480, - 468, -454} | {-440, 426, - 414, -400} | {-360, -346, - 334, -320} | {-306, -292, - 280, -266} | |
| | RU 5 | RU 6 | RU 7 | RU 8 | |
| | [-252: -201] | [-198: -147] | [-118: -67] | [-64: -13] | |
| | {-246, 232, - 220, -206} | {-192, -178, - 166, -152} | {-112, -98, - 86, -72} | {-58, -44, -32, -18} | |
| | RU 9 | RU 10 | RU 11 | RU 12 | |
| | [13: 64] | [67: 118] | [147: 198] | [201: 252] | |
| | {18, 32, 44, 58} | {72, 86, 98, 112} | {152, 166, 178, 192} | {206, 220, 232, 246} | |
| | RU 13 | RU 14 | RU 15 | RU 16 | |
| | [260: 311] | [314: 365] | [394: 445] | [448: 499] | |
| | {266, 280, 292, 306} | {320, 334, 346, 360} | {400, 414, 426, 440} | {454, 468, 480, 494} | |
| 106-tone RU | RU 1 | RU 2 | RU 3 | RU 4 | |
| | [-499: -394] | [-365: -260] | [-252: -147] | [-118: -13] | |
| | {-494, 468, - 426, -400} | {-360, -334, - 292, -266} | {-246, -220, - 178, -152} | {-112, -86, - 44,18} | |
| | RU 5 | RU 6 | RU 7 | RU 8 | |
| | [13: 118] | [147: 252] | [260: 365] | [394: 499] | |
| | {18, 44, 86, 112} | {152, 178, 220, 246} | {266, 292, 334, 360} | {400, 426, 468, 494} | |
| 242-tone RU | RU 1 | | RU 2 | | |
| | [-500: -259] | | [-253: -12] | | |
| | {-494, 468, -426, -400, -360, - 334, -292, -266} | | {-246, -220, -178, -152, -112, - 86, -44, 18} | | |
| | RU 3 | | RU 4 | | |
| | [12: 253] | | [259: 500] | | |
| | {18, 44, 86, 112, 152, 178, 220, 246} | | {266, 292, 334, 360, 400, 426, 468, 494} | | |
| 484-tone RU | RU 1 | | | | |
| | [-500: -259, -253: -12] | | | | |
| | {-494, -468, -426, 400, -360, -334, -292, 266, -246, -220, -178, - 152, -112, -86, -44, -18} | | | | |
| | RU 2 | | | | |
| | [12: 253, 259: 500] | | | | |
| | {18, 44, 86, 112, 152, 178, 220, 246, 266, 292, 334, 360, 400, 426, 468, 494} | | | | |
| 996-tone RU | RU 1 | | | | |
| | [-500: -3, 3: 500] | | | | |
| | {-468, -400, -334, 266, -220, -152, -86, -18, 18, 86, 152, 220, 266, 334, 400, 468} | | | | |

## Claims

1. A communication method in a wireless local area network, comprising:
generating, by an access point, a trigger frame, wherein the trigger frame comprises resource allocation information and first indication information, the first indication information indicates a first bandwidth to a station, the resource allocation information indicates a first distributed resource unit RU that is allocated to the station and that corresponds to the first bandwidth, the first distributed RU comprises a plurality of non-contiguous subcarriers in frequency domain, and the first bandwidth is a bandwidth of at least one sub-channel occupied by the subcarriers comprised in the first distributed RU; and
sending, by the access point, the trigger frame to the station.

2. A communication method in a wireless local area network, comprising:
receiving, by a station, a trigger frame sent by an access point, wherein the trigger frame comprises resource allocation information and first indication information, the first indication information indicates a first bandwidth to a station, the resource allocation information indicates a first distributed resource unit RU that is allocated to the station and that corresponds to the first bandwidth, the first distributed RU comprises a plurality of non-contiguous subcarriers in frequency domain, and a bandwidth of at least one sub-channel occupied by the subcarriers comprised in the first distributed RU is the first bandwidth; and
sending, by the station, a trigger-based physical layer protocol data unit PPDU on the first distributed RU based on triggering of the trigger frame.

3. The method according to claim 1 or 2, wherein the trigger frame further comprises second indication information indicating whether an RU allocated to the station is a distributed RU or a contiguous RU.

4. The method according to any one of claims 1 to 3, wherein the first bandwidth is less than or equal to any one of the following bandwidths: a maximum bandwidth supportable by the station, a maximum distributed bandwidth supported by a system, or a bandwidth of a PPDU scheduled by the access point.

5. The method according to any one of claims 1 to 4, wherein the first distributed RU is obtained by mapping a first contiguous RU to the first bandwidth, and the first bandwidth is a bandwidth of at least one sub-channel occupied by subcarriers comprised in a second contiguous RU that is in the first bandwidth and that is allocated to another station.

6. The method according to any one of claims 1 to 5, wherein the first bandwidth does not overlap a bandwidth of at least one sub-channel occupied by subcarriers comprised in a third contiguous RU that is located outside the first bandwidth and that is allocated to another station.

7. The method according to any one of claims 1 to 3, wherein the first indication information is located in a common field or a user information list field, and indicates the first bandwidth.

8. The method according to claim 7, wherein the first indication information comprises an N-bit bitmap, N is a quantity of sub-channels comprised in a bandwidth of the PPDU, 1 bit in the N-bit bitmap corresponds to one sub-channel, and the bit indicates whether the corresponding sub-channel is allowed to be distributed across the sub-channel.

9. The method according to claim 7, wherein the first indication information comprises a P-bit bitmap, 1 bit in the P-bit bitmap corresponds to one sub-block, the sub-block comprises a plurality of sub-channels, the bit indicates whether each sub-channel comprised in the corresponding sub-block is allowed to be distributed across the sub-channel, and P is an integer greater than or equal to 1; and
each sub-channel in a sub-block is allowed to be distributed across a bandwidth occupied by the sub-block only when each sub-channel in the sub-block is allowed to be distributed across the sub-channel; or each of at least one sub-channel is allowed to be distributed across a bandwidth occupied by a sub-block only when the sub-block comprises the at least one sub-channel that is allowed to be distributed across the sub-channel.

10. The method according to claim 7, wherein the first indication information comprises an M-bit bitmap, 1 bit in the M-bit bitmap corresponds to one sub-block, one sub-block comprises a plurality of sub-channels, the bit indicates whether each sub-channel in the corresponding sub-block is allowed to be distributed across the sub-channel, and M is an integer greater than or equal to 1.

11. The method according to any one of claims 7 to 10, wherein the first indication information further indicates whether two or more sub-blocks are allowed to form a distributed bandwidth, and one of the two or more sub-blocks comprises a sub-channel that is allowed to be distributed across the sub-channel.

12. The method according to claim 7, 9, or 10, wherein the first indication information further comprises an S-bit bitmap, 1 bit in the S-bit bitmap corresponds to one sub-block, the bit indicates whether the corresponding sub-block is allowed to be distributed across the sub-block, and S is an integer greater than or equal to 1.

13. The method according to any one of claims 1 to 3, wherein the first indication information comprises one or more first indices, and one first index corresponds to one sub-block and indicates distributed bandwidth ranges respectively corresponding to a plurality of sub-channels comprised in the sub-block.

14. The method according to claim 13, wherein sub-channels in a sub-block are allowed to be distributed across the sub-block, and the first indication information indicates distributed bandwidth ranges respectively corresponding to a plurality of sub-blocks comprised in a bandwidth of the PPDU.

15. The method according to claim 14, wherein the first indication information comprises one or more second indices, one second index corresponds to one sub-block, sub-blocks corresponding to second indices with a same value form a distributed bandwidth, and sub-channels comprised in sub-blocks corresponding to second indices with different values are allowed to be distributed only in the sub-blocks.

16. The method according to any one of claims 1 to 3, wherein the first indication information comprises a 2-bit bitmap, and the 2-bit bitmap indicates that the first bandwidth is 20 MHz, 80 MHz, or a bandwidth of the PPDU.

17. A communication apparatus, comprising a processing module and a transceiver module, wherein
the processing module is configured to generate a trigger frame, wherein the trigger frame comprises resource allocation information and first indication information, the first indication information indicates a first bandwidth to a station, the resource allocation information indicates a first distributed resource unit RU that is allocated to the station and that corresponds to the first bandwidth, the first distributed RU comprises a plurality of non-contiguous subcarriers in frequency domain, and the first bandwidth is a bandwidth of at least one sub-channel occupied by the subcarriers comprised in the first distributed RU; and
the transceiver module is configured to send the trigger frame to the station.

18. A communication apparatus, comprising a processing module and a transceiver module, wherein
the transceiver module is configured to receive a trigger frame sent by an access point, wherein the trigger frame comprises resource allocation information and first indication information, the first indication information indicates a first bandwidth to the communication apparatus, the resource allocation information indicates a first distributed resource unit RU that is allocated to the communication apparatus and that corresponds to the first bandwidth, the first distributed RU comprises a plurality of non-contiguous subcarriers in frequency domain, and the first bandwidth is a bandwidth of at least one sub-channel occupied by the subcarriers comprised in the first distributed RU;
the processing module is configured to determine the trigger frame; and
the transceiver module is further configured to send a trigger-based physical layer protocol data unit PPDU on the first distributed RU based on triggering of the trigger frame.

19. The apparatus according to claim 17 or 18, wherein the trigger frame further comprises second indication information indicating whether an RU allocated to the station is a distributed RU or a contiguous RU.

20. The apparatus according to any one of claims 17 to 19, wherein the first bandwidth is less than or equal to any one of the following bandwidths: a maximum bandwidth supportable by the station, a maximum distributed bandwidth supported by a system, or a bandwidth of a physical layer protocol data unit PPDU scheduled by the access point.

21. The apparatus according to any one of claims 17 to 20, wherein the first distributed RU is obtained by mapping a first contiguous RU to the first bandwidth, and is a bandwidth of at least one sub-channel occupied by subcarriers comprised in a second contiguous RU that is in the first bandwidth and that is allocated to another station is the first bandwidth.

22. The apparatus according to any one of claims 17 to 21, wherein the first bandwidth does not overlap a bandwidth of at least one sub-channel occupied by subcarriers comprised in a third contiguous RU that is located outside the first bandwidth and that is allocated to another station.

23. The apparatus according to any one of claims 17 to 19, wherein the first indication information is located in a common field or a user information list field, and indicates the first bandwidth.

24. The apparatus according to claim 23, wherein the first indication information comprises an N-bit bitmap, N is a quantity of sub-channels comprised in a bandwidth of the PPDU, 1 bit in the N-bit bitmap corresponds to one sub-channel, and the bit indicates whether the corresponding sub-channel is allowed to be distributed across the sub-channel.

25. The apparatus according to claim 23, wherein the first indication information comprises a P-bit bitmap, 1 bit in the P-bit bitmap corresponds to one sub-block, the sub-block comprises a plurality of sub-channels, the bit indicates whether each sub-channel comprised in the corresponding sub-block is allowed to be distributed across the sub-channel, and P is an integer greater than or equal to 1; and
each sub-channel in a sub-block is allowed to be distributed across a bandwidth occupied by the sub-block only when each sub-channel in the sub-block is allowed to be distributed across the sub-channel; or each of at least one sub-channel is allowed to be distributed across a bandwidth occupied by a sub-block only when the sub-block comprises the at least one sub-channel that is allowed to be distributed across the sub-channel.

26. The apparatus according to claim 23, wherein the first indication information comprises an M-bit bitmap, 1 bit in the M-bit bitmap corresponds to one sub-block, one sub-block comprises a plurality of sub-channels, the bit indicates that each sub-channel in the corresponding sub-block is allowed to be distributed across the sub-channel, and M is an integer greater than or equal to 1.

27. The apparatus according to any one of claims 23 to 26, wherein the first indication information further indicates whether two or more sub-blocks are allowed to jointly form a distributed bandwidth, and one of the two or more sub-blocks comprises a sub-channel that is allowed to be distributed across the sub-channel.

28. The apparatus according to any one of claims 23 to 26, wherein the first indication information further comprises an S-bit bitmap, 1 bit in the S-bit bitmap corresponds to one sub-block, the bit indicates whether the corresponding sub-block is allowed to be distributed across the sub-block, and S is an integer greater than or equal to 1.

29. The apparatus according to any one of claims 17 to 19, wherein the first indication information comprises one or more first indices, and one first index corresponds to one sub-block and indicates distributed bandwidth ranges respectively corresponding to a plurality of sub-channels comprised in the sub-block.

30. The apparatus according to claim 29, wherein sub-channels in a sub-block are allowed to be distributed across the sub-block, and the first indication information further indicates distributed bandwidth ranges respectively corresponding to a plurality of sub-blocks comprised in a bandwidth of the PPDU.

31. The apparatus according to claim 30, wherein the first indication information comprises one or more second indices, one second index corresponds to at least one sub-block, sub-blocks corresponding to second indices with a same value form a distributed bandwidth, and sub-channels comprised in sub-blocks corresponding to second indices with different values are allowed to be distributed only in the sub-blocks.

32. The apparatus according to any one of claims 17 to 19, wherein the first indication information comprises a 2-bit bitmap, and the 2-bit bitmap indicates that the first bandwidth is 20 MHz, 80 MHz, or a bandwidth of the PPDU.

33. A communication apparatus, wherein the communication apparatus comprises a processor and a memory, the memory is configured to store a computer program, and the processor is configured to execute the computer program stored in the memory, to enable the apparatus to perform the method according to any one of claims 1 to 16.

34. A chip, wherein the chip comprises at least one processor and an interface, the processor is configured to read and execute instructions stored in a memory, and when the instructions are run, the chip is enabled to perform the method according to any one of claims 1 to 16.

35. A computer-readable storage medium, wherein the computer-readable storage medium stores a computer program, the computer program comprises program instructions, and when the program instructions are executed by a computer, the computer is enabled to perform the method according to any one of claims 1 to 16.

36. A computer program product, wherein the computer program product stores a computer program, and when the computer program is executed by a computer, the computer is enabled to perform the method according to any one of claims 1 to 16.
